(19) **Europäisches Patentamt / European Patent Office / Office européen des brevets**

(11) **EP 2 941 683 B1**

(12) **FASCICULE DE BREVET EUROPEEN**

(45) Date de publication et mention
de la délivrance du brevet:
**09.02.2022 Bulletin 2022/06**

(21) Numéro de dépôt: **13827030.1**

(22) Date de dépôt: **30.12.2013**

(51) Classification Internationale des Brevets (IPC):
**G06F 3/0346** $^{(2013.01)}$ **G06F 3/046** $^{(2006.01)}$
**A63F 13/20** $^{(2014.01)}$ **A63F 9/04** $^{(2006.01)}$
**G06F 3/0487** $^{(2013.01)}$ **G06F 3/0484** $^{(2022.01)}$
**A63F 3/00** $^{(2006.01)}$ **G06F 3/041** $^{(2006.01)}$
**A63F 13/235** $^{(2014.01)}$

(52) Classification Coopérative des Brevets (CPC):
**G06F 3/0416; A63F 3/00643; A63F 13/235;**
**G06F 3/0346; G06F 3/046; G06F 3/04842;**
**G06F 3/04847; G06F 3/0487;** A63F 9/0468;
A63F 2300/1068; A63F 2300/6045;
G06F 2203/0382

(86) Numéro de dépôt international:
**PCT/FR2013/053286**

(87) Numéro de publication internationale:
**WO 2014/106718 (10.07.2014 Gazette 2014/28)**

(54) **COMMANDE D'UNE STATION D'ACCUEIL PAR MOUVEMENT DE DISPOSITIF MOBILE**

STEUERUNG EINER HOSTSTATION DURCH BEWEGUNG EINER BEWEGLICHEN
VORRICHTUNG

CONTROL OF A HOST STATION THROUGH MOVEMENT OF A MOVING DEVICE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **04.01.2013 FR 1350079**

(43) Date de publication de la demande:
**11.11.2015 Bulletin 2015/46**

(73) Titulaire: **Starbreeze Paris**
**75008 Paris (FR)**

(72) Inventeurs:
- **DUTEIL, Christophe**
  **F-75006 Paris (FR)**
- **LEFÈVRE, Valentin**
  **F-92800 Puteaux (FR)**

(74) Mandataire: **Santarelli**
**49, avenue des Champs-Elysées**
**75008 Paris (FR)**

(56) Documents cités:
**WO-A1-2005/078562**    **WO-A1-2012/028827**
**US-A1- 2007 015 588**    **US-A1- 2012 313 882**
**US-A1- 2013 002 614**    **US-B1- 6 262 711**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention concerne les interfaces entre un utilisateur et un système informatique, notamment dans le domaine des jeux, et plus particulièrement un procédé et des dispositifs pour interfacer une pluralité de dispositifs mobiles avec un système informatique.

Dans de nombreuses situations, il peut être nécessaire, pour un système informatique, de détecter la position et/ou l'orientation d'éléments mobiles pour permettre à ce dernier de réagir en conséquence. Ainsi, par exemple, dans un jeu d'échec permettant à un utilisateur de jouer contre un joueur virtuel simulé par le système informatique, l'application mise en œuvre sur le système informatique doit connaître la position de toutes les pièces de l'échiquier, notamment celles déplacées par l'utilisateur, pour calculer son coup.

Il existe des solutions pour détecter la position et/ou l'orientation d'objets réels sur un plateau de jeu permettant d'utiliser ces objets comme interface d'un système informatique.

Ainsi, par exemple, des écrans tactiles de type résistif peuvent être utilisés comme plateau de jeu afin de détecter la position d'un objet tel qu'un stylet lorsqu'une pression suffisante est appliquée. Cependant, ce type d'écran ne supporte en général qu'un seul contact et nécessite une pression constante de l'utilisateur pour connaître la position. En d'autres termes, il n'est pas possible de détecter la position du stylet si la pression exercée par ce dernier est relâchée.

Il est également possible d'utiliser des écrans tactiles de type capacitif, basés sur le principe d'une fuite de courant via un corps conducteur. Cependant, seuls des objets conducteurs et reliés à une masse permettent la détection de leur position. Ainsi, par exemple, les positions d'objets en plastique ou en bois ne peuvent être déterminées à l'aide de tels écrans.

Par ailleurs, de façon générale, les solutions à base d'écran tactile, ou de film tactile, ne supportent qu'un nombre limité de contacts simultanés ou quasi-simultanés et ne permettent pas la détermination d'un nombre important d'objets.

D'autres solutions mettent en œuvre des technologies à base d'infrarouge, notamment sous forme de tables. Ainsi, par exemple, les produits connus sous les noms de Surface (Surface est une marque de Microsoft), de mTouch (mTouch est une marque de Merel Technologies) et d'Entertaible (Entertaible est une marque de Philips) utilisent des caméras infrarouges disposées dans l'épaisseur de la table. Cependant, l'épaisseur imposée de ces tables les rend encombrantes, peu mobiles et leur confère une certaine rigidité. En outre, leur prix ne permet pas réellement un usage familial.

Enfin ces solutions ne permettent pas de détecter l'altitude, par rapport à une référence prédéterminée, des éléments mobiles dont les mouvements et/ou orientations sont détectés.

Dans le document WO 2012/028827 un procédé a été proposé pour permettre à un système informatique de déterminer simplement et efficacement la position d'un nombre important de dispositifs mobiles pouvant être utilisés pour interagir avec ce système informatique. Un procédé d'aide à la localisation de dispositifs mobiles a été aussi été décrit dans la demande de brevet français n° FR 1255334. US2007015588 A1 divulgue un programme de jeu, un support de stockage d'informations destiné à stocker ce programme de jeu, et un dispositif de jeu. Un système d'entrée comprend une tablette de type à induction électromagnétique et un objet formé comportant une partie bobine intégrée destinée à la réalisation d'une communication prédéterminée au moyen d'une opération d'induction électromagnétique ainsi qu'une partie mémoire intégrée contenant des informations d'identification sur l'objet formé. Le système d'entrée est connecté à un ordinateur. Lorsque l'objet formé est placé sur la tablette, l'ordinateur acquiert la position de placement et le sens de déplacement sur la tablette ainsi que les informations d'identification sur l'objet formé placé en provenance du système d'entrée. Des informations de personnage correspondant aux informations d'identification sur l'objet formé sont sélectionnées et introduites dans un espace de jeu. Selon la position de placement et le sens de déplacement acquis en provenance du système d'entrée, la mise en œuvre et le mouvement du personnage sont commandés et une image dans l'espace de jeu incluant le personnage est générée.

La présente invention s'inscrit dans ce cadre.

Les inventeurs ont identifié la possibilité d'utiliser la détection de la position d'un ou plusieurs dispositifs mobiles par rapport à la station d'accueil pour créer un nouveau type d'interface avec le système informatique de la station d'accueil.

Un **premier aspect** de l'invention concerne un procédé de commande d'un dispositif d'accueil pour au moins un dispositif mobile comportant les étapes suivantes de :

- détermination d'une position courante dudit au moins un dispositif mobile par rapport à une surface d'interaction dudit dispositif d'accueil au moyen d'au moins un signal électrique induit par au moins un champ magnétique inducteur dans au moins un circuit électrique du dispositif d'accueil associé à ladite surface d'interaction, ladite détermination d'une position courante comprenant la détermination d'une position de chacun d'une pluralité de modules de localisation dudit au moins un dispositif mobile, lesdits modules de localisation étant activés séquentiellement pour générer un champ magnétique inducteur destiné à induire un signal électrique dans ledit au moins un circuit électrique, chacun desdits modules de localisation étant associé à une surface d'interaction dudit au moins un dispositif mobile différente et comprenant un solénoïde dont l'axe radial est perpendiculaire à la surface d'interaction dudit au moins un dispositif mobile associée,

- enregistrement de ladite position courante dans un historique de positions, ledit historique de position comportant un ensemble de positions dudit au moins un dispositif mobile sur une fenêtre temporelle glissante,

- comparaison, au moyen dudit historique, d'une évolution de la position dudit au moins un dispositif mobile par rapport à la surface d'interaction dudit dispositif d'accueil avec au moins schéma d'évolution de référence, ledit schéma d'évolution de référence étant associé à au moins un mouvement de référence du dispositif mobile par rapport à la surface d'interaction dudit dispositif d'accueil, et

- déclenchement d'une commande dudit dispositif d'accueil en fonction dudit mouvement de référence, si ladite évolution correspond audit mouvement de référence,

  - dans lequel, ladite position comporte :
  - une distance entre le dispositif mobile et ladite surface d'interaction dudit dispositif d'accueil,
  - une coordonnée du dispositif mobile dans un repère associé à ladite surface d'interaction dudit dispositif d'accueil, et
  - une orientation du dispositif mobile selon un axe orthogonal à ladite surface d'interaction dudit dispositif d'accueil.

Un procédé selon le premier aspect permet de commander un dispositif d'accueil pour dispositifs mobiles à partir de gestes effectuées par un utilisateur manipulant un élément mobile.

Il est ainsi offert à l'utilisateur une interface avec le dispositif d'accueil qui est intuitive et peu complexe car elle ne nécessite pas d'élément dédié à l'interface (souris, clavier ou autre) en plus des éléments mobiles.

Tous les déplacements dans l'espace de l'élément mobile par rapport au dispositif d'accueil peuvent ainsi être utilisés pour définir une commande du dispositif d'accueil.

Une absence de déplacement durant une période prédéterminée peut aussi être considérée comme un mouvement de référence. Ainsi, par exemple, si le dispositif mobile est laissé immobile durant cette période prédéterminée, une action associée à cet immobilisme peut être déclenchée.

L'historique de positions peut par exemple être stocké dans un fichier, tel qu'un fichier temporaire, en mémoire vive ou en mémoire durable. L'historique peut cependant être stocké sous d'autres formes (file d'attente informatique de type FIFO, « First In First Out » en anglais, un espace mémoire alloué, une base de données ou autre).

Un procédé selon le premier aspect peut permettre de coupler l'utilisation des éléments mobiles en tant qu'interface utilisateur avec un affichage sur un écran qui peut être soit intégré au dispositif d'accueil ou soit déporté par rapport à celui-ci.

Ainsi, par exemple, le procédé peut en outre comporter les étapes suivantes :

- d'affichage sur un écran d'au moins un élément contextuel de sélection de ladite commande, ledit au moins un élément contextuel étant affiché au niveau d'une position sur l'écran représentant la position dudit dispositif mobile par rapport à ladite surface d'interaction,

- sélection dudit élément contextuel en fonction d'une première identification d'un premier mouvement de référence, et

- déclenchement de ladite commande en fonction d'une deuxième identification d'un deuxième mouvement de référence.

Ladite surface d'interaction peut être superposée audit écran. L'écran peut aussi être déporté par rapport à la station d'accueil.

Les mouvements détectés peuvent être de différentes natures, offrant ainsi à l'utilisateur une variété de gestes pour commander le dispositif d'accueil.

Par exemple, l'évolution de la position dudit dispositif mobile comporte une variation rapide de la distance entre le dispositif mobile et la surface d'interaction, et ledit mouvement de référence est un clic.

Ladite commande peut alors comporter l'activation d'une action sélectionnée.

Par exemple encore, l'évolution de la position dudit dispositif mobile comporte une succession de variations rapides de la distance entre le dispositif mobile et une position de référence dans un repère associé à ladite surface d'interaction, et ledit mouvement de référence est une secousse.

Ladite commande peut alors comporter l'annulation d'une action en cours.

Selon un autre exemple, l'évolution de la position dudit dispositif mobile comporte un déplacement rectiligne lent du dispositif mobile par rapport à ladite surface d'interaction, et ledit mouvement de référence est une glissade.

Ladite commande peut alors comporter la variation d'un curseur en fonction du déplacement du dispositif mobile.

Selon un autre exemple, l'évolution de la position dudit dispositif mobile comporte une rotation de celui-ci par rapport à un axe orthogonal à ladite surface d'interaction, et ledit mouvement de référence est une rotation du dispositif mobile entre une première direction et une deuxième direction.

Ladite commande peut alors comporter la sélection d'un élément contextuel affiché sur un écran et situé dans ladite deuxième direction.

Selon des modes de réalisation, une étape préalable de réception d'un signal d'activation généré par le dispositif mobile suite à l'actionnement d'une interface utilisateur sur le dispositif mobile permet d'activer la détermination de la position courante du dispositif mobile.

Ainsi, la reconnaissance de mouvement de référence qui s'ensuit n'est opérée qu'à la demande de l'utilisateur, ce qui permet d'économiser des ressources de calcul au sein du dispositif d'accueil.

Un **deuxième aspect** de l'invention concerne un programme d'ordinateur ainsi qu'un produit programme d'ordinateur et un support de stockage pour de tels programme et produit, permettant la mise en œuvre d'un procédé selon le premier aspect lorsque le programme est chargé et exécuté par un processeur, par exemple un processeur d'un dispositif d'accueil de dispositif mobile.

Un **troisième aspect** concerne un dispositif d'accueil configuré pour la mise en œuvre d'un procédé selon le premier aspect.

Par exemple, un tel dispositif comporte au moins une surface d'interaction avec au moins un dispositif mobile, ledit dispositif d'accueil comportant un circuit électrique associé à ladite surface d'interaction, et une unité de traitement configurée pour la mise en œuvre des étapes d'un procédé selon le premier aspect.

Un **quatrième aspect** concerne un dispositif mobile.

Par exemple, un tel dispositif mobile comporte une pluralité de modules de localisation pour générer champ magnétique inducteur destiné à induire un signal électrique dans au moins un circuit électrique d'un dispositif d'accueil, chacun desdits modules de localisation étant associé à une surface d'interaction dudit au moins un dispositif mobile différente et comprenant un solénoïde dont l'axe radial est perpendiculaire à la surface d'interaction dudit au moins un dispositif mobile associée, ledit dispositif mobile comportant en outre une interface utilisateur configurée pour déclencher l'émission, par le dispositif mobile, d'un signal de commande du dispositif d'accueil.

Selon une réalisation, ledit signal est un signal d'activation de la détermination par le dispositif d'accueil, de la position courante du dispositif mobile par rapport à une surface d'interaction du dispositif d'accueil.

Ce signal permet à l'utilisateur d'enclencher une séquence de reconnaissance de mouvement de référence. Une telle reconnaissance à la demande permet d'économiser des ressources de calcul du dispositif d'accueil.

Selon une autre réalisation, ladite interface comporte une pluralité de positions successives, et ledit signal est un signal représentatif d'une position courante de l'interface.

L'interface peut ainsi être un curseur ou une molette. Ce type d'interface permet d'utiliser des interfaces graphiques permettant à l'utilisateur de sélectionner des valeurs dans une plage de valeur ou encore des éléments dans une liste.

Selon une autre réalisation encore, le dispositif comporte au moins deux modules de localisation, un premier module de localisation étant installé dans un corps principal du dispositif mobile, un second module de localisation étant installé dans un corps secondaire du dispositif mobile, le corps secondaire étant apte à se déplacer par rapport au corps principal.

Avec une telle réalisation, l'utilisateur peut effectuer des gestes de rotation du corps secondaire par rapport au corps principal, effectuant ainsi un mouvement de référence associé à une commande.

Un **cinquième aspect** concerne un système comportant un dispositif d'accueil selon le troisième aspect et au moins un dispositif mobile selon le quatrième aspect.

D'autres avantages, buts et caractéristiques de la présente invention ressortent de la description détaillée qui suit, faite à titre d'exemple non limitatif, au regard des dessins annexés dans lesquels :

- la **figure 1** illustre schématiquement un exemple d'architecture pouvant mettre en œuvre de l'invention ;
- la **figure 2** illustre un exemple de surface de détection et de logique associée ;
- la **figure 3** illustre schématiquement le principe physique de couplage inductif entre un solénoïde et une boucle conductrice d'une surface de détection ;
- la **figure 4** illustre schématiquement un mécanisme d'interpolation permettant de calculer la position d'un solénoïde placé sur une surface de détection, selon un axe donné, à partir des mesures obtenues par un système tel que celui décrit en référence à la figure 2
- la **figure 5** illustre un contexte de mise en œuvre de modes de réalisation de l'invention ;
- les **figures 6a, 6b, 6c et 6d** illustrent des exemples de réalisation de dispositifs mobiles,
- les **figures 6e et 6f** illustrent le dimensionnement de dispositifs mobiles ;
- la **figure 7a** illustre schématiquement des blocs logiques d'un module de localisation d'un dispositif mobile dont la position et/ou l'orientation peuvent être déterminées à partir d'un dispositif d'accueil ;
- la **figure 7b** illustre un exemple d'implémentation électronique du schéma logique décrit en référence à la figure 7a relatif à un module de localisation d'un dispositif mobile dont la position et/ou l'orientation peuvent être déterminées ;
- les **figures 8a-8h** illustrent des modes de réalisation de modules de localisation de dispositif mobile ;
- les **figures 9 et 10** illustrent des exemples d'algorithmes pouvant être utilisés pour activer séquentiellement un ensemble de modules de localisation et calculer les positions et/ou orientations des dispositifs mobiles correspondants ;
- les **figures 11a-11d** illustrent des mouvements de référence de dispositifs mobiles ;
- les **figures 12a-12g** illustrent des commandes associées à des mouvements de référence ;
- la **figure 13** est un organigramme d'étapes mises en œuvre dans des modes de réalisation ; et

- les **figures 14a-14c** illustrent des modes de réalisation de dispositifs mobiles avec interface d'utilisateur.

## DISPOSITIF D'ACCUEIL

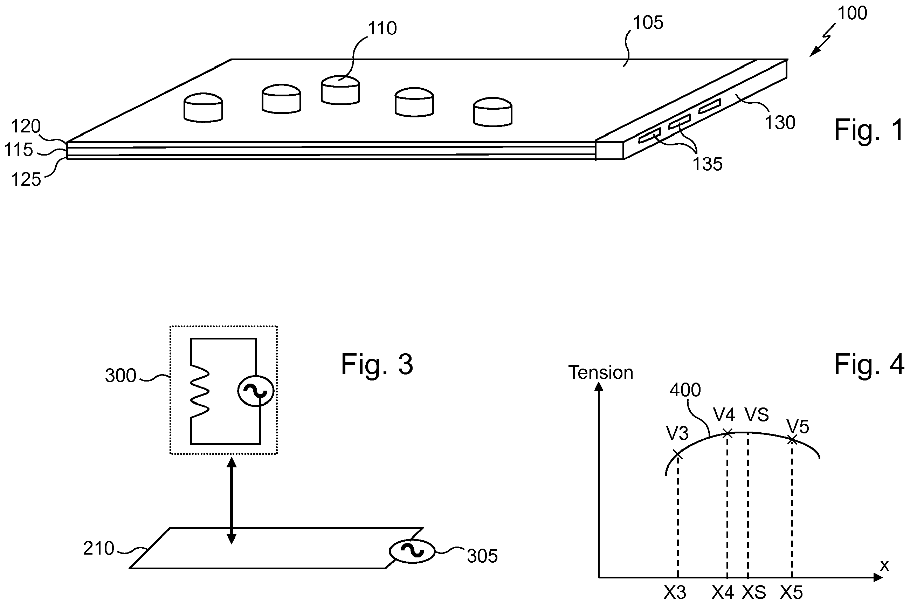

En référence aux figures 1 à 4, sont décrits un dispositif d'accueil et des dispositifs mobiles pouvant être utilisés pour des modes de réalisation de l'invention.

Une architecture générale 100 de mise en œuvre de modes de réalisation est schématiquement illustrée par la **figure 1.** Par exemple, cette architecture est appliquée dans le cadre d'une application de jeu. L'invention ne se limite toutefois pas à une telle application. Des détails sur ce type d'architecture peuvent être trouvés dans le document WO 2012/028827.

L'architecture 100 comprend de manière générale un dispositif d'accueil 105. Le dispositif d'accueil peut par exemple prendre la forme d'un plateau. Dans le cadre de l'application de jeu, un plateau de jeu peut être adapté pour coupler la surface supérieure du dispositif d'accueil à un écran. Cet écran peut par exemple permettre d'afficher des informations pour un utilisateur en fonction d'actions réalisées par celui-ci sur le dispositif d'accueil.

Pour interagir avec le dispositif d'accueil, l'utilisateur peut utiliser des dispositifs mobiles 110 faisant partie de l'architecture décrite ici en référence à la figure 1. Sur la figure 1, cinq dispositifs mobiles sont représentés. Toutefois, l'invention ne saurait être limitée ni au nombre de dispositifs mobiles représentés, ni à leur forme. Par exemple, pour interagir avec le dispositif d'accueil, ou plus précisément avec le système informatique associé, l'utilisateur peut déplacer les dispositifs mobiles.

Pour détecter les interactions de l'utilisateur, le dispositif d'accueil comporte une couche de détection 115 pour détecter la présence et/ou la position et/ou l'orientation des dispositifs mobiles par rapport à celle-ci.

Par exemple, la couche de détection est couplée à un écran 120 et une couche aimantée 125 (la couche de détection 115, l'écran 120 et la couche aimantée 125 sont ici sensiblement parallèles). Un module de détection 130 du dispositif d'accueil permet de détecter la position et, si nécessaire, l'orientation des dispositifs mobiles ainsi que pour mettre en œuvre une ou plusieurs applications avec lesquelles interagit l'utilisateur.

Le module de détection est notamment en charge de gérer les détections des positions et/ou orientations des dispositifs mobiles. A cet effet, ce module peut par exemple identifier des modules de localisation (non représentés) disposés dans les dispositifs mobiles. Par exemple, le module de détection les identifie les uns à la suite des autres, puis leur transmet un signal d'activation pour qu'ils émettent, chacun leur tour, un champ électromagnétique. Le module de détection met alors en œuvre une évaluation de leurs positions à partir de signaux induits dans la couche de détection par les champs magnétiques émis.

Le module de détection est par exemple inséré dans une coque avec les autres éléments du dispositif d'accueil 105. Alternativement, il peut s'agir d'un module déporté intégré, par exemple, à un ordinateur ou une console de jeu. Il peut être alimenté électriquement par batterie rechargeable ou via un adaptateur secteur et présente un ensemble de connexions classiques 135, par exemple une prise électrique pour adaptateur secteur, des ports USB, Ethernet, vidéo VGA (sigle de *Video Graphics Array* en terminologie anglo-saxonne) et/ou HDMI (sigle de *High Definition Multimedia In* en terminologie anglo-saxonne), le cas échéant, notamment si un écran est associé à la couche de détection. Il peut en outre comprendre un module de communication sans fil, par exemple un module de communication sans fil de type WIFI ou Bluetooth permettant d'interagir avec un autre système informatique et/ou d'accéder à des données via un réseau de communication.

Le module de détection 130 comprend un module de calcul et un module de pilotage de détection et de capture de position détaillé ci-après. Le module de calcul est ici pourvu d'une unité centrale de traitement (CPU, sigle de *Central Processing Unit* en terminologie anglo-saxonne), une unité de traitement graphique (GPU, sigle de Graphic Processing Unit en terminologie anglo-saxonne), des composants mémoires (RAM, sigle de *Random Access Memory* en terminologie anglo-saxonne, ROM, sigle de *Read Only Memory* en terminologie anglo-saxonne et/ou de type Flash) pour stocker les programmes et les variables nécessaires à la mise en œuvre de l'invention ainsi qu'un module de traitement du son, sous forme, par exemple, d'un chipset.

Selon un mode de réalisation particulier, le module matériel 130 n'est pas intégré au dispositif d'accueil 105 mais est relié à lui. Il s'agit par exemple d'un dispositif de type smartphone connecté au plateau 105.

Le module de pilotage de détection et de capture de position active séquentiellement, par exemple par radio, chaque module de localisation dont la position doit être déterminée ou contrôle une telle activation séquentielle.

Après activation, chaque module de localisation émet ici un champ électromagnétique capté par la surface de détection. Ainsi, un module de localisation peut également être vu comme un module de génération de champ magnétique. La génération du champ magnétique permettant au dispositif d'accueil de localiser le dispositif mobile.

Une fois le champ électromagnétique capté, la surface de détection transmet au module de détection et de capture de position des informations permettant de calculer la position d'un module de localisation, par exemple de type (x, y, z). Comme décrit ci-après, lorsque plusieurs modules de localisation sont associés à un même dispositif mobile, il est possible, à partir des positions de ces modules de localisation, de déterminer des paramètres d'orientation de ce dispositif mobile, par exemple sous forme d'angles. Les positions et/ou orientation de tous les dispositifs mobiles dont la position et/ou l'orientation doivent être déterminées sont alors transmises au module de calcul qui les utilise pour gérer l'interactivité avec l'application considérée.

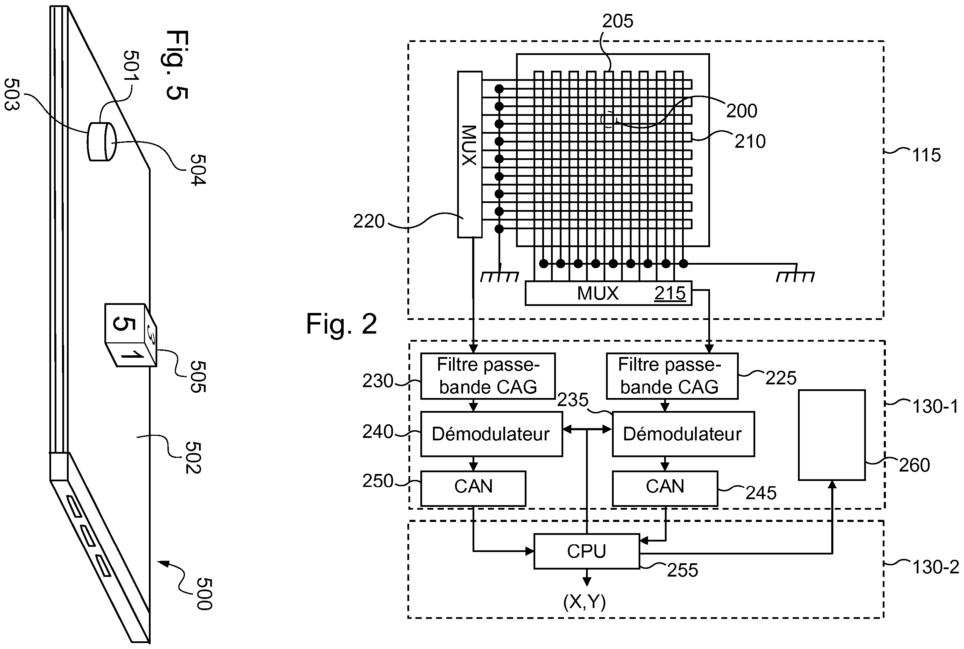

La **figure 2** illustre un exemple de couche de détection et de logique associée selon un mode de réalisation.

La couche de détection 115 comporte un maillage sous forme de lignes et de colonnes constituant une grille conductrice. Cette dernière comprend un ensemble de boucles conductrices suivant deux axes orthogonaux. Chaque boucle est un capteur discret permettant de mesurer un signal induit, par exemple l'intensité d'un courant induit ou la tension induite par un champ électromagnétique. Le champ électromagnétique est par exemple généré par un élément rayonnant, tel qu'un solénoïde appartenant à un dispositif mobile dont la position et/ou l'orientation doivent être calculées positionné à proximité de la surface supérieure du dispositif d'accueil, et plus particulièrement à proximité de la couche de détection.

A titre d'illustration, il est supposé ici qu'un solénoïde est placé à proximité de la position marquée 200 sur la figure 2, à l'intersection des boucles 205 et 210 dont une extrémité est reliée à une masse et l'autre extrémité est reliée aux composants électroniques utilisés pour calculer une position. Lorsque le solénoïde situé à la position 200 est alimenté, il génère un champ magnétique qui induit des courants électriques dans les boucles 205 et 210 qui peut être analysé et comparé aux courants induits dans les autres boucles. Il est ainsi possible, par couplage inductif entre le solénoïde et la grille et par mesure de courant induit, de déterminer la position du solénoïde par rapport à la grille conductrice et donc par rapport à la couche de détection.

Des multiplexeurs 215 et 220 sont reliés à chaque boucle de chacun des deux axes de la grille, c'est-à-dire ici à chacune des boucles verticales et horizontales, respectivement. Les sorties des multiplexeurs 215 et 220 sont connectées aux contrôleurs automatiques de gain (CAG) 225 et 230, respectivement, du module de pilotage de détection et de capture de position, référencé ici 130-1, du module de détection. Les signaux de sortie des contrôleurs automatiques de gain 225 et 230 sont tout d'abord démodulés dans les démodulateurs 235 et 240, respectivement. La démodulation produit un signal continu (DC, sigle de *Direct Current* en terminologie anglo-saxonne) proportionnel à la sinusoïde originale complétée de composantes alternatives (AC, sigle *d'Alternating Current* en terminologie anglo-saxonne) multiples de la fréquence fixe du champ magnétique émis par le solénoïde.

Selon un schéma couramment mis en œuvre, le module de calcul, référencé ici 130-2, du module de détection 130 pilote les multiplexeurs 215 et 220 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe-bande peut être mis en œuvre dans chaque contrôleur automatique de gain 225 et 230 pour supprimer les harmoniques indésirables du signal démodulé ainsi que le bruit de fond électromagnétique. Ce filtrage permet d'affiner les mesures des signaux issus des multiplexeurs 215 e 220, qui sont démodulés dans les démodulateurs 235 et 240 puis numérisés dans les convertisseurs analogique/numérique (CAN) 245 et 250, respectivement.

Les valeurs numériques obtenues sont transmises à l'unité centrale de traitement (CPU) 255 du module de calcul 130-2 pour être mémorisées. Comme illustré, l'unité centrale de traitement 255 contrôle les démodulateurs 235 et 240.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module de pilotage de détection et de capture de position 130-1 comprend ici un émetteur 260, commandé par l'unité centrale de traitement 255 du module de calcul 130-2, permettant d'activer un module de localisation d'un dispositif mobile. A titre d'illustration, l'unité centrale de traitement 255 transmet à l'émetteur 260 un identifiant d'un module de localisation à activer. Cet identifiant est codé puis transmis sous forme de signal radio numérique ou analogique. Chaque module de localisation recevant ce signal d'activation peut alors comparer l'identifiant reçu avec son propre identifiant et s'activer si les identifiants sont identiques. Alternativement, l'unité centrale de traitement 255 transmet à l'émetteur 260 une commande générale d'activation qui est codée puis transmise sous forme de signal radio numérique ou analogique.

L'émetteur 260 est relié à une antenne 265 permettant la transmission d'un signal de commande utilisé par les éléments mobiles comme source d'énergie et pour activer les modules de localisation. L'antenne 265 peut être placée sur la surface de détection 115, par exemple autour des boucles 205 et 210. Les boucles 205 et 210 peuvent être utilisées pour former l'antenne 265. A ces fins, un commutateur est utilisé pour déterminer la fonction d'émission ou de réception des boucles 205 et 210 (ces dernières sont alors, en fonction de la position du commutateur, reliées aux multiplexeurs 215 et 220 ou à l'émetteur 260).

Comme décrit ci-dessous, l'émetteur 260 peut notamment comprendre un lecteur de type RFID.

Ainsi, pour estimer la position d'un ensemble de modules de localisation, chaque module de localisation est séquentiellement activé et, pour chacune de ces activations, selon le mode de réalisation décrit ici, un cycle est effectué sur chaque ensemble de boucles.

Plusieurs couches de détection peuvent être combinées les unes avec les autres dans un même plan, la superficie de la couche de détection résultante étant la somme des superficies des couches de détection combinées. A ces fins, une couche de détection est considérée comme « maître », les autres étant considérées comme esclaves. L'activation séquentielle des dispositifs mobiles est gérée par la couche de détection « maître » qui reçoit, de préférence, les positions calculées par les modules de détection associés à chaque couche de détection esclave et les consolide en élaborant un tableau contenant les coordonnées et angles de liberté des modules de localisation.

La **figure 3** illustre schématiquement le principe physique de couplage inductif entre un solénoïde et une boucle conductrice d'une couche de détection.

Chaque dispositif mobile dont la position et/ou l'orientation doivent être calculées comprend au moins un solénoïde dont l'axe est, de préférence, orientée vers la surface de détection.

Le solénoïde 300 est parcouru par un courant alternatif et génère (ou émet) un champ électromagnétique qui se propage vers la surface de détection, notamment, dans cet exemple, vers la boucle 210. La boucle 210, recevant un champ électromagnétique issu du solénoïde 300, se couple avec le solénoïde 300. Il est alors possible de mesurer un signal alternatif aux bornes de cette boucle, référencé 305.

Le couplage entre le solénoïde 300 et la boucle 210 peut s'exprimer sous la forme de la relation suivante,

$$R = \frac{k}{D^2} E$$

où E désigne la tension aux bornes du solénoïde 300, R désigne la tension du signal reçu aux bornes 305 de la boucle de réception 210, D est la distance entre le solénoïde 300 et la boucle de réception 210 et k est une constante liée à des facteurs intrinsèques du système comprenant le solénoïde et la boucle de réception, notamment le nombre de spires du solénoïde et la taille de la boucle.

La **figure 4** illustre schématiquement un mécanisme d'interpolation permettant de calculer la position d'un solénoïde placé à proximité d'une couche de détection, selon un axe donné, à partir de mesures obtenues par un système tel que celui décrit en référence à la figure 2.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement à partir d'un identifiant de la boucle correspondante (ces valeurs sont prédéfinies selon le schéma de routage de la surface de détection et, de préférence, mémorisées dans une mémoire non volatile).

La portion de courbe 400 représentée sur la figure 4 illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice.

Les relations suivantes illustrent cette propriété.

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante,

$$X4 - X3 = X5 - X4 = \Delta X$$

$$X5 - X3 = 2\Delta X$$

($\Delta X$ représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante,

$$D = \sqrt{\frac{k}{R}E}$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

Comme indiqué précédemment, l'électronique d'activation et de localisation des éléments mobiles est alimentée électriquement par induction. L'antenne utilisée pour capter l'énergie peut être aussi utilisée pour activer et synchroniser l'élément mobile. Selon des réalisations, l'alimentation des modules de localisation des éléments mobile est réalisée par un module de télé-alimentation d'un circuit de type RFID. L'utilisation d'une technologie de type RFID peut ainsi être utilisée pour alimenter des modules de localisation et, le cas échéant, comme moyens de communication pour permettre de les activer ou les synchroniser.

A ces fins, l'émetteur 260 représenté sur la figure 2 (ou plus généralement le module de pilotage de détection de position) utilise un lecteur de type lecteur RFID permettant un mode de communication et de synchronisation du module de localisation via la technologie RFID. Les communications peuvent alors être réalisées par écritures et lectures dans une mémoire non volatile d'un circuit de type RFID embarqué dans les éléments mobiles. De telles mémoires sont par exemple accessibles par le dispositif d'accueil par des accès de type RFID ainsi que par des microcontrôleurs embarqués dans les éléments mobiles par des liaisons électriques directes. Une synchronisation peut notamment être réalisée par une modulation spécifique de l'amplitude de la porteuse RFID.

Ainsi, par exemple, l'électronique du dispositif d'accueil comprend un lecteur de type RFID, c'est-à-dire un système permettant d'accéder en lecture et écriture à des composants de type RFID, ou tags RFID, situés à proximité de du dispositif d'accueil. Cette électronique comprend ici au moins une bobine conductrice couvrant tout ou une partie de la surface d'interaction du dispositif d'accueil, utilisée comme antenne émettrice/réceptrice RFID.

La puissance magnétique moyenne émise par l'antenne RFID du dispositif d'accueil est d'un niveau tel qu'elle permet de télé-alimenter par induction magnétique l'électronique des éléments mobiles situés à proximité immédiate de l'antenne RFID.

Il est observé ici que le lecteur RFID et les éléments mobiles peuvent exploiter une des nombreuses normes RFID et leurs dérivées telles que les normes ISO/IEC 15693, ISO 18000-3, ISO 18000-4, ISO 18000-7, ISO/IEC 14443, ISO/IEC 18092 (plus connue sous le nom de NFC, sigle de Near Field Communication en terminologie anglo-saxonne), ISO/IEC 21481 (également connue sous le nom de NFC).

L'unité centrale de traitement utilisée pour contrôler la surface de captation, par exemple l'unité centrale de traitement 255, est également utilisée ici pour contrôler le lecteur RFID. Elle peut aussi contrôler temporellement l'activation et la désactivation de la production du champ électromagnétique de télé-alimentation en phase avec un cycle de durée T1 d'un signal commun de synchronisation.

Selon des réalisations, au moins certains des éléments mobiles contiennent une mémoire double-port non volatile. Cette dernière est ici accessible aussi bien par un lecteur de type RFID, via une communication sans fil, que par un microcontrôleur local, via une liaison filaire, par exemple une liaison conforme au standard de bus I$^2$C (sigle d'Inter Integrated Circuit en terminologie anglo-saxonne). Alors que cette mémoire double-port peut être utilisée pour déclencher l'activation d'un élément mobile et donc permettre sa localisation, elle peut également être utilisée à d'autres fins en offrant un moyen de communication particulier entre un élément mobile et la surface de captation.

La mémoire double-port d'un élément mobile peut être accessible en lecture et en écriture par le lecteur de type RFID du dispositif d'accueil. Elle forme un moyen de communication entre la logique du dispositif d'accueil et un microcontrôleur embarqué dans un élément mobile. Le microcontrôleur est, de préférence, alerté de chaque requête de lecture et d'écriture reçue via le protocole de communication sans fil. Suite à la réception d'une indication de réception d'une requête, le microcontrôleur peut interroger cette mémoire pour déterminer si une telle requête lui est destinée, le type d'accès (accès en écriture ou en lecture) et l'adresse mémoire visée par la requête d'accès.

Par ailleurs, chaque élément mobile contient en mémoire non volatile un identifiant unique stocké, par exemple, sur 64 bits. Selon un mode de réalisation particulier, cet identifiant unique est celui connu sous le nom d'UID (sigle d'Unique IDentifier en terminologie anglo-saxonne) d'un composant électronique accessible à l'aide d'un lecteur de type RFID. Un tel identifiant peut notamment être conforme à une norme telle que les normes ISO 15693, ISO 18000-3 et ISO14443. Ainsi, un lecteur de type RFID permet de détecter l'arrivée de nouveaux éléments mobiles et de les identifier de façon unique par leur identifiant.

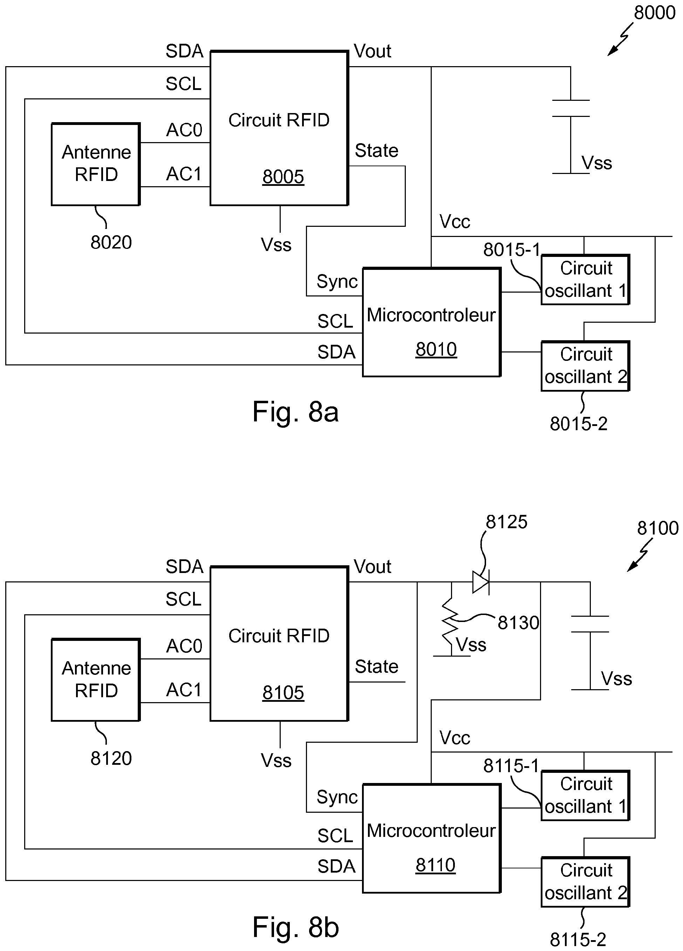

Comme décrit ci-après, en référence aux figures 8a-8h, la logique associée au dispositif d'accueil peut déterminer et allouer une valeur de temporisation à chaque module de localisation détecté. Une valeur de temporisation représente ici une période de temps après laquelle un module de localisation doit émettre un signal de localisation suite à la détection d'un signal de synchronisation. La valeur de temporisation allouée à un module de localisation nouvellement détecté peut être une valeur de temporisation libre (précédemment alloué à un module de localisation qui n'est plus détecté).

A ces fins, le lecteur de type RFID peut adresser la valeur de temporisation déterminée à une mémoire double-port d'un module de localisation dans une requête en écriture. A titre d'illustration, un système informatique associé au dispositif d'accueil peut interroger une base de données, locale ou distante, avec l'identifiant du module de localisation comme clé d'accès. Une telle base de données permet par exemple d'obtenir la liste des caractéristiques fonctionnelles de l'élément mobile. Ainsi, par exemple, cette base de données peut être utilisée pour déterminer si l'élément mobile comprenant le module de localisation considéré dispose de moteurs, d'actuateurs, de dispositifs d'affichage, de dispositifs de production de sons, de capteurs et/ou d'interrupteurs. La liste des fonctionnalités obtenue peut notamment être utilisée pour déterminer la nature d'échanges de commandes et de données possibles entre le système informatique et l'élément mobile.

La mémoire double-port et la mémoire non volatile utilisée pour stocker un identifiant de module de localisation sont, de préférence, intégrées avec un module de télé-alimentation au sein d'un même composant. De tels composants sont disponibles. Ainsi, par exemple, la société ST Micro Electronics fabrique un composant sous la référence M24LR16E qui offre des fonctions de mémoire double-port, de récupération d'énergie et d'interfaçage sans fil.

Dans un élément mobile, un tel circuit est avantageusement relié à un microcontrôleur par un bus de type I2C.

Par ailleurs, chaque élément mobile comprend un ou plusieurs circuits oscillants ainsi qu'au moins un commutateur pour permettre l'émission de signaux de localisation. Le commutateur est par exemple contrôlé par le microcontrôleur qui déclenche ainsi l'oscillation ou l'arrêt de l'oscillation permettant la localisation du module de localisation correspondant. Il est observé ici que l'utilisation de deux circuits oscillants permet de localiser un élément mobile et d'en déterminer l'orientation. Un seul circuit oscillant peut être utilisée si, seule, la position de l'élément mobile doit être déterminée. Alternativement, plus de deux circuits oscillants peuvent être utilisés, notamment pour améliorer l'estimation de la position et/ou l'orientation de l'élément mobile.

D'autres modes de réalisation peuvent être envisagés pour la logique associée à la couche de détection. Il est par exemple possible de se référer au document WO 2012/028827.

## CONTEXTE DE MISE EN OEUVRE

Après avoir décrit l'architecture générale d'un dispositif d'accueil permettant la mise en œuvre de modes de réalisation, un contexte de mise en œuvre de modes de réalisation l'invention est décrit dans la suite.

La **figure 5,** illustre schématiquement un dispositif d'accueil 500 tel que déjà décrit en détails ci-avant.

Un dispositif mobile 501 est disposé sur la surface supérieure (ou surface d'accueil ou surface d'interaction) 502, du dispositif d'accueil. Ce dispositif mobile comporte deux faces 503 et 504. Le dispositif mobile 501 est disposé sur la surface d'accueil sur la face 503, celle-ci n'est donc pas visible sur la figure 5.

Le dispositif mobile 501 comporte deux surfaces d'interaction qui correspondent aux faces 503 et 504. Il est supposé que l'utilisateur peut interagir avec le dispositif d'accueil, via le dispositif mobile 501, en posant ce dernier sur la surface d'accueil sur l'une ou l'autre de ses faces. Selon l'invention, le dispositif d'accueil est alors en mesure de déterminer la face sur laquelle est posé le dispositif mobile. Dans l'exemple illustré, le dispositif mobile a globalement la forme d'un disque. Par exemple, le dispositif mobile peut représenter un jeton que l'utilisateur peut poser sur l'une ou l'autre de ses faces.

Un autre dispositif mobile 505 est posé sur la surface d'accueil. Ce dispositif mobile a globalement la forme d'un cube. Il comporte ainsi six faces numérotées « 1 » à « 6 ». Ces faces constituent des surfaces d'interaction avec la surface d'accueil. Dans l'exemple représenté, le dé est posé sur sa face numérotée « 4 » et seules les faces numérotées « 1 », « 3 » et « 5 » sont visibles.

Par exemple, l'utilisateur met en œuvre sur le dispositif d'accueil une application, ou un jeu, nécessitant l'utilisation d'un dé. L'utilisateur peut alors jeter le dé sur la surface d'accueil et, en fonction de la face sur laquelle le dé se pose, le dispositif d'accueil peut en déduire le numéro tiré. Le dispositif d'accueil détecte la surface d'interaction en contact avec la surface d'accueil et déduit la face du dé présentée à l'utilisateur. Dans une telle application, la couche aimantée discutée dans la présentation du dispositif d'accueil peut être désactivée le temps du lancer de dé, voire supprimée.

Les dispositifs mobiles 501 et 504 décrits ci-dessus ont des formes et des fonctions purement illustratives. La présente invention ne saurait être limitée à des dispositifs mobiles ayant ces formes ou ayant ces fonctions.

## ELEMENTS MOBILES

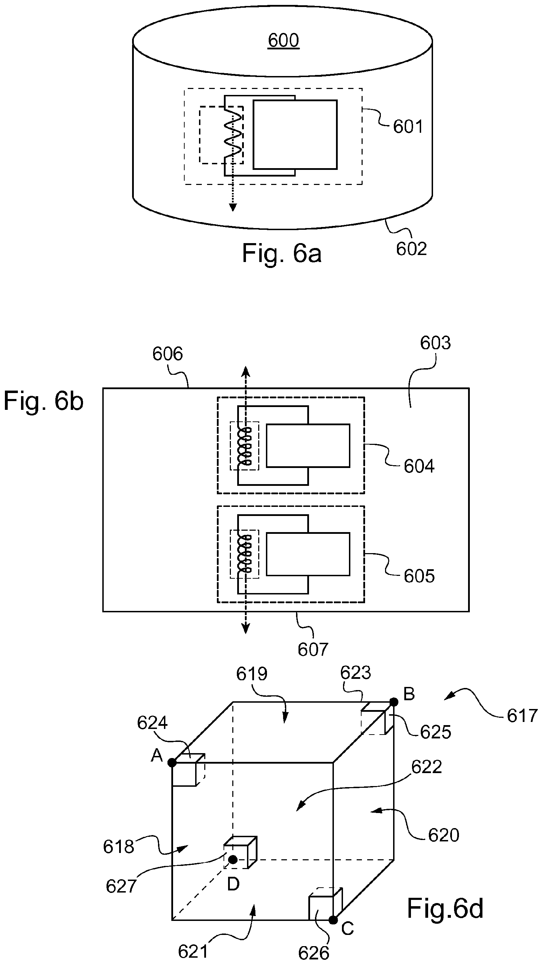

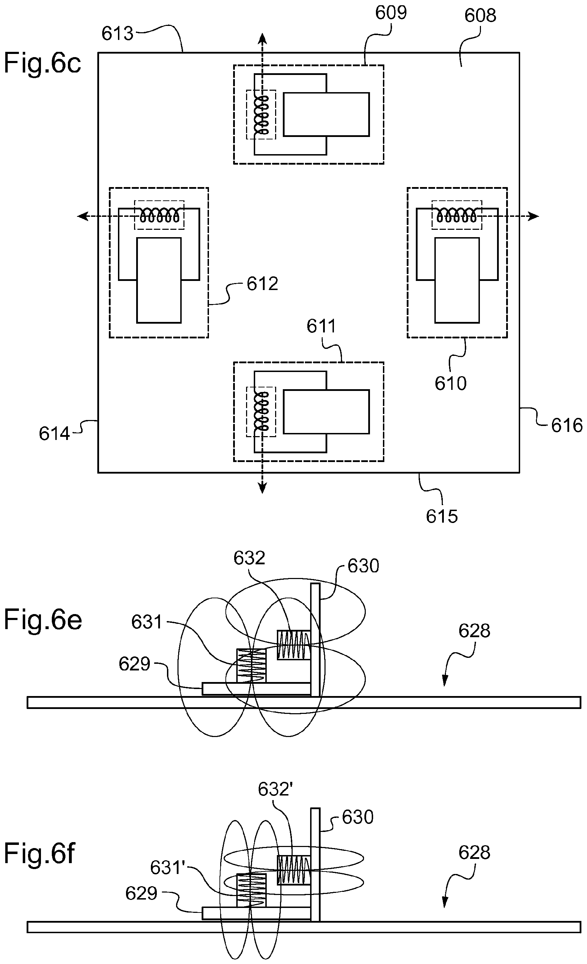

Les figures 6b, 6c et 6d illustrent schématiquement et respectivement quatre exemples de dispositifs mobiles selon des modes de réalisation. L'invention ne se limite pas à ces exemples. Ces exemples peuvent être combinés.

Le dispositif mobile 600 , qui n'est pas couvert par les revendications présentes, représenté sur la **figure 6a** comprend un seul module de localisation 601. Le dispositif mobile a globalement la forme d'un disque, par exemple pour servir de jeton. Le dispositif mobile pourrait toutefois avoir une autre forme.

Comme illustré, le dispositif comporte un solénoïde dont l'axe radial est perpendiculaire au plan de la face 602 (ou surface d'interaction) à laquelle le module de détection est associé. Ainsi, le rayonnement électromagnétique (représenté par une flèche) du solénoïde se propage de façon optimale vers cette face.

La position tridimensionnelle du dispositif mobile 600 peut être calculée comme décrit précédemment. A partir de la position calculée du solénoïde du module de localisation 601 et connaissant la position de ce module dans le dispositif mobile 600, il est possible d'en déduire la position de ce dernier, c'est-à-dire la position d'un point de référence de ce dispositif mobile par rapport à la une couche de détection d'un dispositif d'accueil. Lorsque plusieurs dispositifs mobiles sont présents sur la surface de détection, la position de chaque dispositif mobile est déterminée de façon séquentielle.

Le dispositif mobile 603 représenté sur la **figure 6b** comprend deux modules de localisation 604 et 605. Ces modules de localisation peuvent être des modules indépendants. A titre d'illustration, le dispositif mobile a globalement la forme d'un disque. Sur la figure 6b, les faces circulaires 606 et 607 du disque ne sont pas visibles.

L'axe radial de chaque solénoïde de chaque module de localisation est avantageusement perpendiculaire au plan de la face (ou surface d'interaction) à laquelle le module de localisation est associé. Ainsi, l'axe radial du solénoïde du module 604 (respectivement 605) est perpendiculaire à la face 606 (respectivement 607). De cette manière, le rayonnement électromagnétique des solénoïdes se propage de façon optimale vers les faces du dispositif mobile.

Le dispositif mobile 608 représenté sur la **figure 6c** comprend six modules de localisation. Ces modules de localisation peuvent être des modules indépendants. A titre d'illustration, le dispositif mobile a globalement la forme d'un cube. Un module de localisation est associé à chaque face du dispositif mobile. Sur la figure 6c, le cube est vu de face et seuls quatre modules de localisation 609, 610, 611, 612 sont représentés. Les dispositifs mobiles respectivement associés à la face avant et à la face arrière du cube ne sont pas représentés dans un souci de clarté de la figure.

L'axe radial de chaque solénoïde de de chaque module de localisation est avantageusement perpendiculaire au plan de la face (ou surface d'interaction) à laquelle le module de localisation est associé. Ainsi, les axes radiaux des solénoïdes des modules 609, 610, 611 et 612 sont respectivement perpendiculaires aux faces 613, 614, 615 et 616. De cette manière, le rayonnement électromagnétique des solénoïdes se propage de façon optimale vers les faces du dispositif mobile.

Le dispositif mobile 617 représenté sur la **figure 6d** comporte quatre modules de localisation. Ces modules de localisation peuvent être des modules indépendants. Par exemple, les modules de localisation comportent des solénoïdes. A titre d'illustration, le dispositif mobile est de forme sensiblement cubique. Il comporte ainsi six faces 618-623. Les quatre modules de localisation 624-627 sont respectivement disposés au niveau de quatre coins A, B, C et D du cube.

Selon la disposition des modules de localisation dans l'élément mobile présentée ici, c'est la combinaison de la détection d'au moins deux modules de localisation au niveau de la couche de détection du dispositif d'accueil qui permet de définir la face du dispositif mobile qui est en interaction avec la station d'accueil.

Lorsque les modules de localisation 624 et 626 (disposés aux coins A et C) sont détectés par la couche de détection, la face 618 est définie comme étant celle en interaction avec la station d'accueil.

Lorsque les modules de localisation 624 et 625 (disposés aux coins A et B) sont détectés par la couche de détection, la face 619 est définie comme étant celle en interaction avec la station d'accueil.

Lorsque les modules de localisation 626 et 625 (disposés aux coins C et B) sont détectés par la couche de détection, la face 620 est définie comme étant celle en interaction avec la station d'accueil.

Lorsque les modules de localisation 626 et 627 (disposés aux coins C et D) sont détectés par la couche de détection, la face 621 est définie comme étant celle en interaction avec la station d'accueil.

Lorsque les modules de localisation 624 et 627 (disposés aux coins A et D) sont détectés par la couche de détection, la face 622 est définie comme étant celle en interaction avec la station d'accueil.

Lorsque les modules de localisation 625 et 627 (disposés aux coins B et D) sont détectés par la couche de détection, la face 623 est définie comme étant celle en interaction avec la station d'accueil.

Avec cette disposition des modules de localisation, il est possible de réduire la complexité et le coût de revient de l'élément mobile car un nombre réduit de modules de localisation est nécessaire.

D'autres formes de dispositifs mobiles ainsi que d'autres dispositions des modules de localisation peuvent être envisagés.

Lorsque le dispositif mobile comporte une pluralité de modules de localisation, il peut en outre comporter une unité de traitement (non représentée) pour les piloter. Par exemple, cette unité de traitement peut recevoir de la part du dispositif d'accueil un signal d'activation, puis déclencher une séquence d'activation des modules de localisation.

Lorsque le dispositif mobile est de dimensions réduites et qu'il comporte plusieurs modules de localisation avec solénoïdes, l'intensité du champ magnétique rayonné doit être déterminée en sorte à ce que deux solénoïdes proches spatialement ne créent pas des perturbations l'un pour le module de localisation de l'autre.

La **figure 6e** illustre ce problème de manière schématique. Deux faces d'un dispositif mobile sont représentées à proximité d'une couche de détection 628 d'un dispositif d'accueil. La face 629 est posée sur la couche de détection tandis que la face 630 lui est orthogonale. Des solénoïdes 631 et 632 appartenant à des modules de localisation sont respectivement associés aux faces 629 et 630. Les lignes de champ magnétique issues des solénoïdes sont représentées.

Les lignes de champ issues du solénoïde 631 traversent la couche de détection induisant ainsi un courant électrique dans la couche de détection. Le dispositif d'accueil détecte donc la présence de la face 618. Or, du fait de la proximité du solénoïde 632, les lignes de champ issues de celui-ci traversent également la couche de détection. Il existe donc un risque que le dispositif d'accueil détecte deux faces (ou surfaces) d'interaction lors d'une même séquence d'activation des modules de localisation. Ce risque existe en particulier si les intensités des champs magnétiques générés sont importantes.

Pour réduire ce risque, il convient de tenir compte, dans le dimensionnement du dispositif mobile, du recouvrement des champs magnétiques générés par des modules de localisation proches.

La **figure 6f** illustre une solution à cet effet. Cette figure reprend les dispositifs de la figure 6e, à l'exception des solénoïdes 631 et 632 qui sont respectivement remplacés par des solénoïdes 631' et '632'. Les solénoïdes 631' et 632' sont de dimensions plus faibles et émettent des lignes de champ magnétiques plus « *compactes* ». Ainsi, comme on peut le remarquer sur la figue 6f, les lignes de champ issues du solénoïde 632' ne traversent pas la couche de détection. Seules les lignes de champ issues du solénoïde 631' traversent cette couche. Le dispositif d'accueil ne peut donc pas détecter les deux faces 629 et 630 lors d'une même séquence.

Les dimensions du solénoïde peuvent donc être choisies en fonction notamment des dimensions des faces auxquelles ils sont associés en sorte à minimiser le risque évoqué ci-avant. D'une manière générale, il convient de s'assurer que les lignes de champ issues d'un solénoïde ne traversent pas (ou peu) la couche de détection lorsque la face qui lui est associée n'est pas en interaction avec celle-ci.

Pour les dispositifs mobiles comprenant une pluralité de modules de localisation, chaque module de localisation peut être activé indépendamment l'un de l'autre, de façon séquentielle. Ainsi, il est possible de déterminer la position du dispositif mobile en déterminant la position de chaque solénoïde des modules de localisation et en connaissant leur position respective dans le dispositif mobile. De même, il est possible de connaître l'orientation de ce dispositif mobile à partir des positions relatives des solénoïdes des modules de localisation et de leur position dans le dispositif mobile.

Il convient d'observer ici que l'utilisation des coordonnées des solénoïdes des modules de localisation, dans le plan de la couche de détection du dispositif d'accueil avec lequel interagit le dispositif mobile, permet de déterminer l'orientation du dispositif mobile par rapport à ce plan tandis que l'utilisation de l'altitude des solénoïdes des modules de localisation par rapport à ce plan permet de calculer le tangage du dispositif mobile.

Il est noté ici que des dispositifs mobiles comprenant un seul module de localisation et comprenant deux modules de localisation peuvent être utilisés conjointement sur un même dispositif d'accueil à condition que le module de pilotage de détection et de capture de position utilisé soit capable d'activer chaque solénoïde indépendamment des autres.

La capture de l'orientation de dispositifs mobiles peut donc être obtenue en dotant chaque dispositif mobile d'au moins deux modules de localisation (ne devant pas être alignés selon une perpendiculaire au plan de la couche de détection) et en définissant une règle d'identification de ces modules de localisation.

Le roulis d'un dispositif mobile peut être déterminé en dotant ce dernier de deux modules de localisation complémentaires (quatre modules de localisation sont alors utilisés) et en complétant la règle d'identification de ces modules pour associer des identifiants de ces quatre modules de localisation à un dispositif mobile.

A partir des positions tridimensionnelles de quatre modules de localisation d'un dispositif mobile, il est possible de calculer ses six degrés de liberté.

Il est également possible, en associant trois modules de localisation à un dispositif mobile, formant un triangle équilatéral, de calculer approximativement ses six degrés de liberté.

L'activation séquentielle de modules de localisation, par un module de pilotage de détection et de capture de position, permet d'estimer la position et/ou l'orientation d'une pluralité de dispositifs mobiles pourvus de ces modules de localisation.

Lorsqu'un module de localisation reçoit une commande d'activation qui lui est dédiée, il déclenche une émission électromagnétique. Le système de détection, connaissant l'identification du module de localisation en cours d'émission, peut alors lier les informations de position calculées à l'identifiant du module de localisation.

Le module de pilotage de détection et de capture de position est donc en charge d'activer séquentiellement une émission électromagnétique par module de localisation, de récupérer une à une l'ensemble des positions et, connaissant les liens entre les identifiants des modules de localisation et des identifiants de dispositifs mobiles, de calculer, le cas échéant, des orientations afin d'associer des positions et/ou orientations aux identifiants de dispositifs mobiles. Il construit ainsi un tableau contenant, pour chaque dispositif mobile, un identifiant, une abscisse, une ordonnée et, de préférence, une altitude dans un repère de la surface de détection ainsi que, le cas échéant, des valeurs de lacet, tangage et roulis.

L'activation séquentielle de l'émission électromagnétique des modules de détection permet l'utilisation d'une unique fréquence d'émission pour l'ensemble des dispositifs mobiles gérés par le système. Différents algorithmes d'activation peuvent être utilisés par le module de pilotage de détection et de capture de position. Il est ainsi possible d'activer systématiquement tous les modules de localisation, d'activer un sous-ensemble de modules de localisation, ce sous-ensemble étant, par exemple, défini par programmation via le module de calcul (une telle mise en œuvre permet en particulier de réduire la durée globale de la séquence d'activation complète des pièces) ou d'activer des modules de localisation selon le contexte. Cette dernière solution permet notamment de gérer le fait que certains dispositifs mobiles peuvent quitter la surface de détection et que leurs positions et/ou orientation ne nécessite plus d'être calculées. Une boucle secondaire peut cependant permettre de surveiller, de préférence, leur possible réintégration sur la surface de détection et le besoin induit de capter de nouveau leur position et/ou orientation. Ce mode permet d'optimiser la durée globale de la séquence d'activation de l'ensemble des modules de localisation devant être activés.

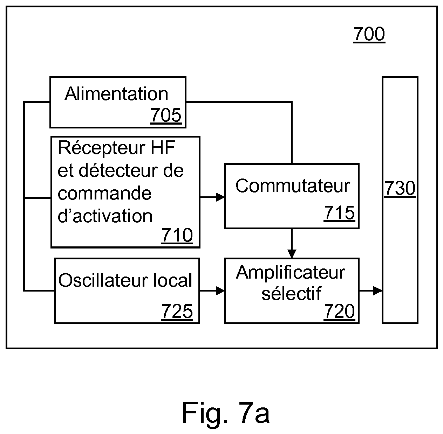

L'architecture générale d'un dispositif mobile est décrite en référence à la **figure 7a.** Un dispositif mobile comporte un module de localisation dont des blocs logiques sont schématiquement représentés. Le module de localisation permet de déterminer, à partir d'un système tel que celui décrit précédemment, la position et/ou l'orientation du dispositif mobile.

La localisation du dispositif mobile se fait au moyen de la génération d'un champ électromagnétique

Un tel dispositif mobile est, de préférence, autonome tant en ce qui concerne son alimentation électrique que la réception de signaux de commande d'émission électromagnétique.

Le module de localisation 700 comprend ainsi un module d'alimentation électrique 705 fournissant une tension pour l'ensemble des composants du module de localisation ainsi qu'un module de réception et détection de commande 710 qui reçoit et démodule un signal, par exemple un signal HF, émis par un module externe de pilotage de détection et de capture de position, pour déterminer si le signal reçu vise l'activation de ce module de localisation. Comme décrit précédemment, une telle détection peut être réalisée par la comparaison d'un identifiant reçu avec un identifiant préalablement mémorisé.

Le module de localisation 700 comprend un outre un commutateur 715, commandé par le module de réception et détection de commande 710, ainsi qu'un amplificateur sélectif 720 commandé par le commutateur 715. Enfin, le module de localisation 700 comprend un oscillateur local 725 générant une fréquence, de préférence, fixe, stable et de type carré et un solénoïde 730.

L'amplificateur sélectif 720 génère, selon la position du commutateur 715 et à partir du signal issu de l'oscillateur local 725, une tension sinusoïdale aux bornes du solénoïde 730, permettant au solénoïde 730 de générer une puissance de rayonnement suffisante.

Plusieurs types d'alimentation électrique du module de localisation peuvent être utilisés. L'alimentation peut être obtenue à partir d'une batterie rechargeable et un circuit de contrôle standard. Elle peut également être obtenue à partir d'une batterie et d'un régulateur de tension permettant d'obtenir une tension constante durant toute une plage d'utilisation de la batterie. Cette solution est particulièrement avantageuse lorsque le système doit calculer l'altitude de dispositifs mobiles mis en œuvre.

L'alimentation peut également être fournie de façon indirecte, par télé-alimentation. Selon ce mode de réalisation, une couche de solénoïdes rayonnants dédiés est placée sous la surface de détection. Ces solénoïdes sont parcourus par un signal sinusoïdal et la puissance émise par chaque solénoïde est suffisante pour télé-alimenter les modules de localisation positionnés au-dessus de lui. Les modules de localisation sont également équipés d'un solénoïde pour la réception, par induction, du signal émis par les solénoïdes présents sous la surface de détection.

La télé-alimentation peut également être couplée avec l'utilisation d'un condensateur de forte capacité qui est chargé à partir du solénoïde du module de localisation. Le condensateur est alors utilisé comme source de tension pour alimenter les autres modules. Alternativement, la télé-alimentation peut être couplée avec l'utilisation d'une batterie présente dans le dispositif mobile, par exemple une batterie au lithium. Le solénoïde du module de localisation recharge alors constamment cette batterie dès qu'il est parcouru par un courant induit. Un circuit de protection de charge/décharge est avantageusement associé à la batterie pour qu'elle reste dans sa plage de tensions acceptables. Comme indiqué précédemment, si l'altitude de dispositifs mobiles doit être évaluée, la source de tension est, de préférence, régulée pour que la tension d'alimentation soit constante durant une durée d'utilisation de cette source de tension, c'est-à-dire durant une estimation de position et/ou d'orientation du dispositif mobile.

Les dispositifs mobiles situés sur une surface de détection et utilisés conjointement peuvent utiliser des types d'alimentation différents.

Par ailleurs, lorsqu'un dispositif mobile comprend plus d'un module de localisation, certains composants, notamment l'alimentation électrique, peuvent être communs à certains ou à tous les modules de localisation.

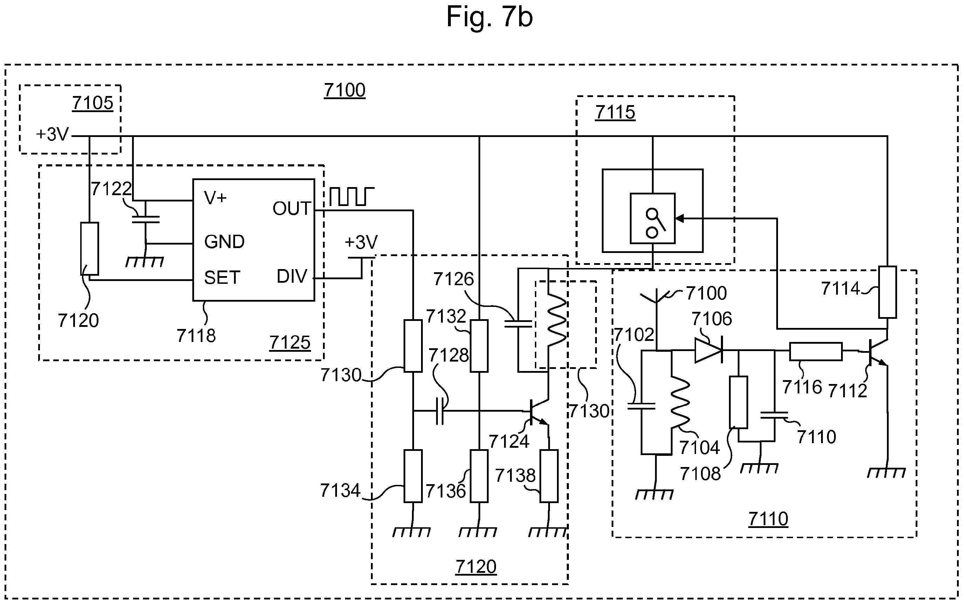

La **figure 7b** illustre un exemple d'implémentation électronique du schéma logique décrit en référence à la figure 7a, relatif à un module de localisation d'un dispositif mobile dont la position et/ou l'orientation peuvent être déterminées.

Le schéma électronique illustré sur la figure 7b vise un mode analogique avec transmission de N porteuses par le module de pilotage de détection et de capture de position, N représentant le nombre maximal de modules de localisation dont les positions peuvent être calculées par le système.

Le module de réception et détection de commande 7110 a ici pour objet de détecter la fréquence de la porteuse associée au module de localisation considéré. Il comprend, dans cet exemple d'implémentation, une antenne de réception 7100 et un réseau LC, comprenant une capacité 7102 et une inductance 7104, accordé sur la fréquence d'émission du module de pilotage de détection et de capture de position. Il comprend également une diode 7106 chargée de supprimer la composante négative du signal ainsi qu'un filtre RC passe-bas, comprenant une résistance 7108 et une capacité 7110, en charge de supprimer la porteuse. Si la porteuse est présente, un signal est présent en sortie du filtre tandis que si la porteuse ne correspond pas au module de localisation considéré, le signal est nul en sortie du filtre. Le module de réception et détection de commande 7110 comprend en outre un transistor de commutation 7112, commandant le commutateur 7115 via une résistance 7114 qui permet d'activer l'amplificateur sélectif 7120. Le transistor de commutation 7112 est ici relié au circuit RC via une résistance 7116.

Une telle implémentation vise une réception de signal d'activation selon en modulation d'amplitude. Cependant, d'autres modes tels qu'une réception en modulation de fréquence ou une réception en modulation de phase peuvent être mis en œuvre.

Le commutateur utilisé est, par exemple, un commutateur HC 4066 de la société Texas Instrument. Il permet d'activer ou de désactiver l'amplificateur sélectif. L'activation est réalisée lorsque le commutateur est passant, c'est-à-dire lorsque l'amplificateur sélectif est relié à l'alimentation.

Comme décrit précédemment, l'oscillateur local 7125 génère, de préférence, un signal carré dont la fréquence est compatible avec les boucles conductrices de la surface de détection (ces boucles étant dimensionnées pour recevoir une fréquence spécifique). Il comprend ici un oscillateur 7118, par exemple un oscillateur LTC 1799 de la société Linear Technology, couplé à une résistance 7120 ayant ici une valeur de 4kOhms pour définir une fréquence d'oscillation de 250 KHz compatible avec la fréquence détectées par les boucles de la surface de détection.

L'amplificateur sélectif 7120 permet de convertir le signal carré généré par l'oscillateur local 7125 en un signal sinusoïdal. Il assure par ailleurs un gain optimal à la fréquence de l'oscillateur local et permet d'obtenir l'intensité requise du signal sinusoïdal parcourant le solénoïde 7130 et donc le rayonnement électromagnétique optimal vers la surface de détection utilisée.

L'amplificateur sélectif est ici réalisé à partir d'un transistor de commutation 7124, des capacités 7126 et 7128 ainsi que du réseau de résistances 7130 à 7138.

La capacité 7128 a, par exemple, pour valeur $33\mu F$ tandis que la résistance 7130 a pour valeur 2kOhms, les résistances 7132, 7134, 7136 et 7138 1kOhms et la résistance 7138 100kOhms. Ainsi, les temps d'établissement et de coupure de l'amplificateur sélectif 720 sont les plus courts possibles.

Le module de réception et détection de commande 7110 peut être réalisé suivant d'autres variantes que celle décrite précédemment. En particulier, au-delà du mode analogique avec transmission de N porteuses par le module de pilotage de détection et de capture de position, il est possible de mettre en œuvre un mode analogique utilisant une seule porteuse contenant un signal utile pour l'activation d'un module de localisation. Selon cette variante, un signal utile dont la fréquence doit être détectée pour activer ou non un module de localisation est disponible en sortie du filtre RC passe-bas. Ce signal peut, par exemple, être filtré dans un filtre passe-bande dont la fréquence de résonance est accordée sur la fréquence d'activation spécifique du module de localisation considéré. La sortie de ce filtre passe-bande est ensuite transmise à un transistor en commutation qui active le commutateur analogique permettant l'activation de l'amplificateur sélectif.

Alternativement, un mode numérique avec transmission d'une seule porteuse contenant un signal utile numérique pour l'activation d'un module de localisation peut être utilisé. Selon cette variante, un signal utile est disponible en sortie du filtre RC passe-bas. Ce signal est typiquement un signal carré contenant une information numérique codée sur plusieurs bits permettant l'activation d'une pluralité de modules de localisation. Chaque module de localisation est équipé d'un microcontrôleur qui décode ce signal et, en fonction de la valeur encodée et d'une valeur prédéterminée, active le commutateur analogique et donc l'amplificateur sélectif.

D'autres protocoles de communication tels que Wi-Fi, ZigBee ou Bluetooth peuvent être utilisés pour transmettre une commande d'activation.

Le couple formé d'un oscillateur local et d'un amplificateur sélectif procure certains avantages. En particulier, l'oscillateur local étant toujours actif, il n'est pas nécessaire de l'activer et le désactiver. En outre, l'amplificateur sélectif utilisé est le dispositif qui fonctionne en commutation (il est alimenté ou non selon la position du commutateur analogique). Une telle implémentation autorise donc un temps d'activation et de désactivation très court pour l'amplificateur sélectif et permet d'optimiser les temps de commutation et donc le temps de cycle global (un cycle correspondant à l'activation/désactivation de l'ensemble des modules de localisation).

Il est cependant possible de mettre en œuvre des variantes plus simples d'oscillateurs pouvant remplacer le couple oscillateur local et amplificateur sélectif, typiquement un montage connu sous le nom de montage de type Clapp ou Colpitts.

Dans la suite, des variantes sont décrites, dans lesquelles les éléments mobiles sont télé-alimentés, comme déjà évoqué plus en avant dans la description.

La **figure 8a** illustre une première variante de réalisation d'un circuit électronique 8000 d'un élément mobile. Comme illustré, le circuit 8000 comprend un composant standard 8005 offrant des fonctions de type RFID et intégrant une mémoire double-port, appelé composant (ou chip en terminologie anglo-saxonne) RFID, un microcontrôleur 8010 et deux circuits oscillants 8015-1 et 8015-2, génériquement référencés 8015. Le circuit 8000 comprend également une antenne 8020 de type RFID adaptée aux caractéristiques du circuit 8005. L'antenne 8020 est typiquement une bobine reliée au circuit 8005 via deux liens appelés ACO et AC1 (pour antenna coils en terminologie anglo-saxonne).

Deux circuits oscillants sont mis en œuvre, de façon séquentielle, pour permettre de déterminer la position et l'orientation de l'élément mobile. En d'autres termes, l'élément mobile comprend ici deux modules de localisation, ces modules de localisation ayant une partie commune (comprenant essentiellement le circuit RFID, l'antenne RFID et le microcontrôleur) et des parties distinctes (comprenant essentiellement les circuits oscillants).

Le circuit RFID 8005 est ici connecté au microcontrôleur 8010 par un bus de type I2C comprenant un lien série pour un signal d'horloge appelé SCL (pour Serial CLock en terminologie anglo-saxonne) et un lien série pour transmettre des données appelé SDA (pour Serial Data en terminologie anglo-saxonne). La borne d'alimentation électrique du microcontrôleur 8010, notée ici Vcc, comme celle des circuits oscillants 8015-1 et 8015-2, est connectée à la borne du circuit RFID 8005 délivrant une tension, notée ici Vout. De façon classique, la borne du circuit RFID 8005 délivrant une tension est reliée à une borne de référence notée Vss par une capacité permettant d'absorber des pics électriques.

Par ailleurs, le signal de synchronisation du microcontrôleur, utilisé pour contrôler le déclenchement ou l'arrêt de l'oscillation (permettant la localisation de l'élément mobile), est connecté à une borne d'état du circuit RFID, notée ici state.

Le circuit RFID 8005 étant relié à l'antenne RFID 8020, il peut recevoir de l'énergie électrique en provenance d'un lecteur RFID et échanger des données avec le lecteur, selon des requêtes en lecture et en écriture, notamment pour mettre à jour sa mémoire. La sortie Vout du circuit RFID 8005 étant reliée aux bornes d'alimentation Vcc du microcontrôleur 8010 et des circuits oscillants 8015-1 et 8015-2, ces circuits peuvent être alimentés électriquement et utilisés.

Selon un exemple, la borne d'état state du circuit RFID 8005 indique, par un premier état logique, par exemple la valeur 1, que le circuit RFID reçoit et traite une requête en lecture ou en écriture ou, plus généralement, qu'il effectue une tâche prédéterminée. Dans le cas contraire, la borne d'état state du circuit RFID 8005 est dans un second état logique, par exemple la valeur 0. Ainsi, du fait de la connexion de la borne de synchronisation du microcontrôleur 8010 à la borne d'état state du circuit RFID 8005, l'un des circuits oscillants 8015-1 ou 8015-2 peut être activé par le microcontrôleur 8010, de façon immédiate ou différée, selon un état du circuit RFID 8005. En d'autres termes, une oscillation et donc une émission électromagnétique est déclenchée (après un délai prédéterminé pouvant être nul) lorsque la borne d'état state du circuit RFID 8005 est dans le premier état logique et arrêtée (également après un délai prédéterminé pouvant être nul) lorsque la borne d'état state du circuit RFID 8005 est dans le second état logique. En d'autres termes, le circuit RFID 8005 est en charge de contrôler le déclenchement ou l'arrêt de l'oscillation (permettant la localisation de l'élément mobile).

Il est observé ici que l'activation des circuits oscillants peut, par exemple, être effectuée de façon séquentielle selon un décalage de temps prédéterminé (l'un des circuits oscillants peut être activé après un premier retard prédéterminé suivant le signal de synchronisation et l'autre circuit oscillant peut être activé après un second retard prédéterminé suivant le signal de synchronisation).

La **figure 8b** illustre une deuxième variante d'un circuit électronique 8100 d'un élément mobile. Comme le circuit 8000, le circuit 8100 comprend un composant standard 8105 offrant des fonctions de type RFID et intégrant une mémoire double-port (composant RFID), un microcontrôleur 8110 et deux circuits oscillants 8115-1 et 8115-2, génériquement référencés 8115. Le circuit 600 comprend en outre une antenne 8120 de type RFID adaptée aux caractéristiques du circuit 8105. A nouveau, l'antenne 8120 est typiquement une bobine reliée au circuit 8105 via les deux liens ACO et AC1.

Comme en ce qui concerne le circuit 8000, le circuit RFID 8105 est ici connecté au microcontrôleur 8010 par un bus de type I2C comprenant les liens SCL et SDA et la borne d'alimentation électrique Vcc du microcontrôleur 8110, comme celle des circuits oscillants 8115-1 et 8115-2, est connectée à la borne Vout du circuit RFID 8105 délivrant une tension.

Cependant, contrairement au circuit 8000, le signal de synchronisation du microcontrôleur, utilisé pour contrôler le déclenchement ou l'arrêt de l'oscillation (permettant la localisation de l'élément mobile), est ici connecté la borne Vout du circuit RFID 8105 délivrant une tension.

Par ailleurs, la borne d'alimentation électrique Vcc du microcontrôleur 8110, comme celle des circuits oscillants 8115-1 et 8115-2, est connectée à la borne Vout du circuit RFID 8105 délivrant une tension via une diode 8125. En outre, une résistance 8130, par exemple une résistance de un méga ohm (1M'Ω) relie la borne Vout du circuit RFID 8105 à la borne de référence Vss.

A nouveau, le circuit RFID 8105 est relié à l'antenne RFID 8120 ce qui lui permet de recevoir de l'énergie électrique en provenance du lecteur RFID et de dialoguer en lecture/écriture avec le lecteur RFID pour mettre à jour sa mémoire. En outre, la sortie Vout du circuit RFID 8105 étant reliée à l'alimentation Vcc du microcontrôleur 8110 et des circuits oscillants 8115-1 et 615-2, ces trois circuits sont alimentés électriquement par le circuit RFID 8105.

La synchronisation du microcontrôleur 8110 est ici réalisée par la sortie Vout du circuit RFID 8105. Ainsi, lorsque le lecteur RFID fournit de l'énergie à l'élément mobile 8100, la sortie Vout du circuit RFID 8105 fournit une tension de contrôle qui se retrouve à l'entrée Sync du microcontrôleur 8110. Cette tension de contrôle représente un premier état logique. Inversement, lorsque la sortie Vout passe en haute impédance lorsque le lecteur RFID ne fournit plus d'énergie à l'élément mobile 8100, l'état de l'entrée Sync du microcontrôleur 8110 passe à 0 Volts grâce à la résistance 8130 de rappel à la masse et à la diode 8125 qui empêche le retour de courant, représentant un second état logique. Les premier et second états logiques permettent la synchronisation du microcontrôleur 8110.

Selon ce mode de réalisation, il est à la charge du logiciel s'exécutant sur le lecteur RFID de générer un signal de télé-alimentation et d'activer ce signal lorsque l'on souhaite synchroniser les microcontrôleurs des éléments mobiles.

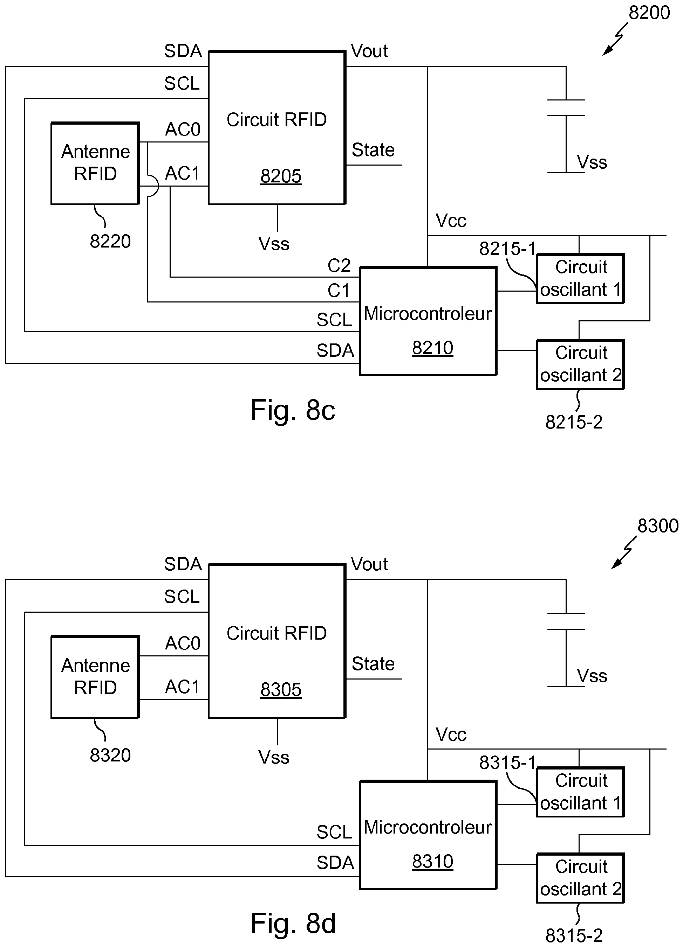

La **figure 8c** illustre une troisième variante d'un circuit électronique 8200 d'un élément mobile. Comme le circuit 8000, le circuit 8200 comprend un composant standard 8205 offrant des fonctions de type RFID et intégrant une mémoire double-port (composant RFID), un microcontrôleur 8210 et deux circuits oscillants 8215-1 et 8215-2, génériquement référencés 8215. Le circuit 8200 comprend en outre une antenne 8220 de type RFID adaptée aux caractéristiques du circuit 8205. A nouveau, l'antenne 8220 est typiquement une bobine reliée au circuit 8205 via les deux liens ACO et AC1.

Comme en ce qui concerne le circuit 8000, le circuit RFID 8205 est ici connecté au microcontrôleur 8210 par un bus de type I2C comprenant les liens SCL et SDA et la borne d'alimentation électrique Vcc du microcontrôleur 8210, comme celle des circuits oscillants 8215-1 et 8215-2, est connectée à la borne Vout du circuit RFID 8205 délivrant une tension.

Cependant, contrairement au circuit 8000, le signal de synchronisation du microcontrôleur 8210 n'est pas utilisé. En effet, la synchronisation est effectuée ici à partir du résultat d'un comparateur analogique du microcontrôleur 8210, dont les bornes sont notées C1 et C2. Comme illustré, ces bornes sont connectées, respectivement, aux bornes AC0 et AC1 de l'antenne RFID 8220. Par conséquent, le contrôle du déclenchement ou l'arrêt de l'oscillation (permettant la localisation de l'élément mobile), est ici directement lié à l'antenne RFID 8220.

A nouveau, le circuit RFID 8205 est relié à l'antenne RFID 8220 ce qui lui permet de recevoir de l'énergie électrique en provenance du lecteur RFID et de dialoguer en lecture/écriture avec le lecteur RFID pour mettre à jour sa mémoire. En outre, la sortie Vout du circuit RFID 8205 étant reliée à l'alimentation Vcc du microcontrôleur 8210 et des circuits oscillants 8215-1 et 8215-2, ces trois circuits sont alimentés électriquement par le circuit RFID 8205.

Le comparateur analogique du microcontrôleur 8210, relié aux bornes C1 et C2, est configuré en mode compteur (mode capture). Cela permet d'obtenir un comptage du nombre d'oscillations en sortie de l'antenne RFID 8220. Ainsi, une fréquence égale à la fréquence de la porteuse émise par le lecteur RFID peut être détectée à la sortie du comparateur analogique lorsque ce dernier émet une porteuse, par exemple une fréquence égale à 15Mhz. Si, au contraire, le lecteur RFID n'émet pas de porteuse, aucune fréquence n'est détectée à la sortie du comparateur analogique (ou une fréquence distincte de celle de la porteuse). En d'autres termes, la synchronisation du microcontrôleur 8205 est réalisée via la détection ou non de la porteuse du lecteur RFID. Il est donc à la charge du logiciel s'exécutant sur le lecteur RFID de générer ou non la porteuse, par exemple une porteuse ayant une fréquence égale à 15Mhz, de façon synchrone avec la fréquence d'activation des éléments mobiles.

Il est observé ici que pour arrêter quasi-instantanément une porteuse RFID, son circuit oscillant est coupé à l'instant où le courant qui le traverse est nul.

La **figure 8d** illustre une quatrième variante d'un circuit électronique 8300 d'un élément mobile. Comme le circuit 8000, le circuit 8300 comprend un composant standard 8305 offrant des fonctions de type RFID et intégrant une mémoire double-port (composant RFID), un microcontrôleur 8310 et deux circuits oscillants 8315-1 et 8315-2, génériquement référencés 8315. Le circuit 800 comprend en outre une antenne 8320 de type RFID adaptée aux caractéristiques du circuit 8305. A nouveau, l'antenne 8320 est typiquement une bobine reliée au circuit 8305 via les deux liens ACO et AC1.

Comme en ce qui concerne le circuit 8000, le circuit RFID 8305 est ici connecté au microcontrôleur 8310 par un bus de type I2C comprenant les liens SCL et SDA et la borne d'alimentation électrique Vcc du microcontrôleur 8310, comme celle des circuits oscillants 8315-1 et 8315-2, est connectée à la borne Vout du circuit RFID 805 délivrant une tension.

Cependant, contrairement au circuit 8000, le signal de synchronisation du microcontrôleur 8310 n'est pas utilisé. En effet, la synchronisation est effectuée ici à partir de la valeur d'une donnée, typiquement d'un bit, mémorisée dans la mémoire double-port du circuit RFID 8305. Par conséquent, le contrôle du déclenchement ou l'arrêt de l'oscillation (permettant la localisation de l'élément mobile), est ici directement lié à une valeur du circuit RFID 8305.

A nouveau, le circuit RFID 8305 est relié à l'antenne RFID 8320 ce qui lui permet de recevoir de l'énergie électrique en provenance du lecteur RFID et de dialoguer en lecture/écriture avec le lecteur RFID pour mettre à jour sa mémoire. En outre, la sortie Vout du circuit RFID 8305 étant reliée à l'alimentation Vcc du microcontrôleur 8310 et des circuits oscillants 8315-1 et 8315-2, ces trois circuits sont alimentés électriquement par le circuit RFID 8305.

Comme indiqué précédemment, la synchronisation du microcontrôleur 8310 se fait via la lecture, ici sur le bus I2C, d'un bit de synchronisation dont le changement d'état permet d'activer la synchronisation. Un tel bit de synchronisation a avantageusement une adresse prédéterminée.

Il est à la charge du logiciel s'exécutant sur le lecteur RFID de générer le changement d'état du bit de synchronisation dans la mémoire du circuit RFID 8305.

Chaque élément mobile comprend ici au moins un solénoïde associé à un condensateur, en parallèle, pour former au moins un circuit oscillant en charge d'émettre un signal de localisation. Ce circuit oscillant est ici stimulé par un microcontrôleur embarqué dans l'élément mobile.

Selon une réalisation, le microcontrôleur situé dans l'élément mobile stimule un circuit oscillant par une de ses sorties configurée pour générer un signal cyclique modulé en largeur d'impulsion et à une fréquence proche de la fréquence propre du circuit oscillant. Le contrôle du rapport cyclique a pour effet de moduler la puissance émise par le module de localisation.

Il est observé ici que les microcontrôleurs récents possèdent des circuits permettant de générer des signaux modulés en largeur d'impulsion. L'utilisation de cette fonctionnalité matérielle permet au microcontrôleur d'exécuter librement des instructions de code logiciel pendant la génération du signal. Ainsi, le microcontrôleur peut implémenter d'autres fonctions et réaliser des calculs sans perturber le cadencement du signal modulé en largeur d'impulsion.

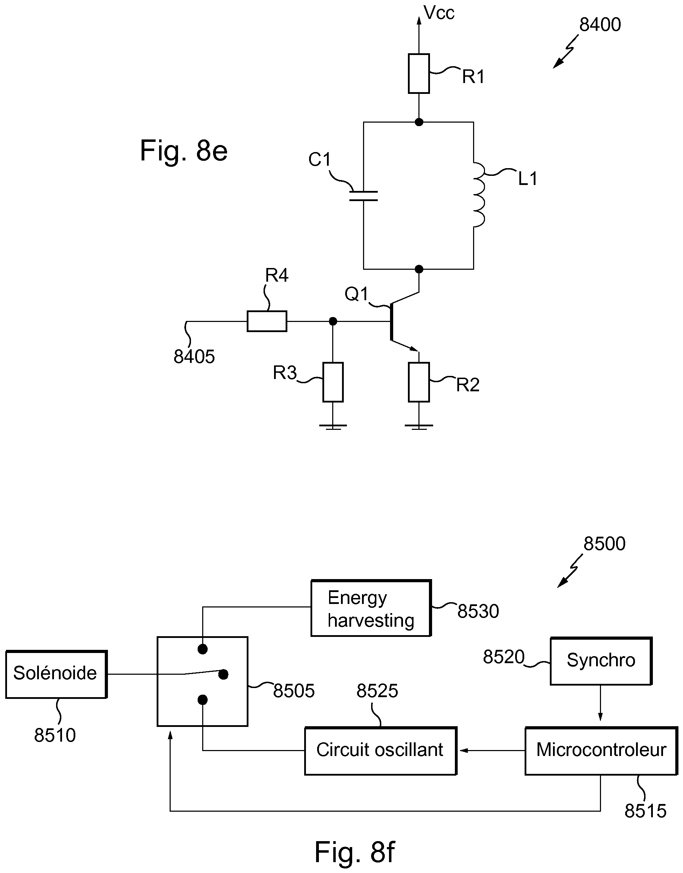

La **figure 8e** illustre un exemple de circuit oscillant pour élément mobile, contrôlé par un microcontrôleur.

Le circuit oscillant 8400 comprend une borne d'entrée 8405 reliée à un microcontrôleur pour recevoir de ce dernier un signal modulé en largeur d'impulsion (signal dit PWM, sigle de Pulse Width Modulation en terminologie anglo-saxonne). Cette borne est reliée, via une résistance R4, par exemple une résistance de 20k'Ω, à la borne de commande d'un transistor Q1 utilisé en mode commutation. L'entrée du transistor Q1 est reliée à un circuit inductif LC comprenant une inductance L1 et une capacité C1 montées en parallèle. L'autre branche de ce circuit inductif est reliée à une résistance R1 reliée à une source de tension, par exemple une source de tension régulée de 3,3V. La valeur de la résistance R1 est ici égale à 100'Ω. La valeur de l'inductance L1 est par exemple de 220 'ΩH tandis que la valeur de la capacité C1 est par exemple de 3,2nF. La sortie du transistor Q1 est reliée à une résistance R2 qui est par ailleurs reliée à la masse. La valeur de la résistance R2 est par exemple égale à 100'Ω. Une résistance de rappel R3 dont la valeur est ici égale à 1M'Ω relie la borne de commande du transistor Q1 à la masse.

Les phases de démarrage et d'arrêt des oscillations sont des périodes de temps où le signal de localisation reçu par une surface de détection n'est en général pas exploitable car il n'est généralement pas assez puissant et d'une amplitude non constante et non contrôlée. Dans une utilisation où de très nombreux éléments mobiles doivent émettre à tour de rôle, ces temps de démarrage et d'arrêt deviennent non négligeables par rapport au temps d'émission utile pendant lequel l'électronique de la surface de détection peut effectivement localiser les éléments mobiles.

Par conséquent, il est important que les phases de démarrage et d'arrêt soient courtes. A ces fins, au démarrage, lors des premières oscillations, le rapport cyclique du signal numérique généré par le microcontrôleur de l'élément mobile est modifié pour injecter plus de puissance et atteindre très vite, de préférence en seulement un ou deux cycles, l'amplitude nominale.

De même, durant la phase d'arrêt, plutôt que d'arrêter simplement de stimuler le circuit oscillant et le laisser se relaxer à un rythme exponentiel (circuit équivalent RLC), pendant un ou deux cycles, le microcontrôleur injecte à chaque cycle une impulsion en opposition de phase avec l'oscillation naturelle du circuit.

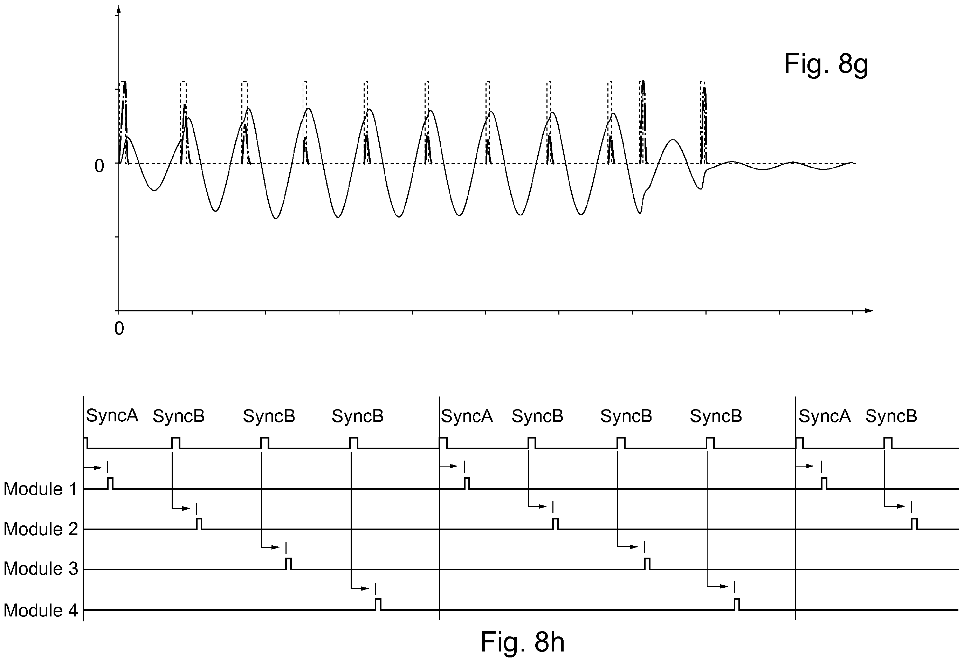

La **figure 8g** représente une simulation montrant le contrôle actif des phases de démarrage et d'arrêt de l'oscillation d'une inductance. Le temps est représenté en abscisse. Le signal en trait continu représente la tension aux bornes du circuit inductif LC, le signal en traits pointillés représente les impulsions de commande en tension issu du microcontrôleur et le signal en traits pointillés gras de longueurs variables représente le courant d'alimentation consommé par le circuit oscillant.

Il est observé ici que la modulation de la puissance émise par des circuits oscillants des modules de localisation permet d'encoder un train binaire correspondant à des données à transférer vers un système informatique lié à la surface de localisation. Connaissant l'amplitude A1 correspondant à l'état bas et l'amplitude A2 correspondant à l'état haut d'un signal de localisation, il est possible d'utiliser une modulation de type NRZ (sigle de Non Return to Zéro en terminologie anglo-saxonne) qui permet à la surface de détection de discriminer les variations d'amplitude associées à un transfert de données, de celles qui sont dues à toutes les causes qui peuvent produire une variation relativement lente de la puissance reçue (comprenant notamment la variation de la distance entre l'élément mobile et la surface de détection ainsi que la variation de la tension d'alimentation de l'élément mobile).

Il est également observé que lorsqu'un élément mobile acquiert de l'énergie (fonction appelée energy harvesting en terminologie anglo-saxonne) sur une porteuse RFID, les courants induits dans la bobine réceptrice de l'élément mobile produisent une contre réaction négative qui réduit localement la puissance du champ magnétique. Dans les phases où un élément mobile n'a pas besoin de plus d'énergie que celle qui a déjà été accumulée, il peut, de préférence, ouvrir le circuit de sa bobine réceptrice pour supprimer ainsi la perturbation induite sur le champ magnétique local. Une telle fonction peut notamment être réalisée à l'aide d'un commutateur analogique de type MOSFET (acronyme de Métal Oxide Semiconductor Field Effect Transistor en terminologie anglo-saxonne) à faible résistance et courant de fuite.

Par ailleurs, quelque-soit la solution matérielle envisagée pour les communications, les transferts de données vers et depuis les éléments mobiles peuvent être chiffrés selon un système cryptographique, par exemple un système cryptographique à base de clés publique et privée de type RSA (sigle de Rivest Shamir Adleman) ou AES (sigle d'Advanced Encryption Standard en terminologie anglo-saxonne).

Il est observé ici que l'activation de circuits oscillants permettant leur localisation peut être effectuée par les microcontrôleurs des éléments mobiles, ces derniers recevant des informations de synchronisation à partir d'un signal de type RFID reçu de l'élément mobile considéré. Cependant, ces informations dérivent typiquement d'un signal basse fréquence, par exemple un signal ayant une fréquence de 1Hz (une telle fréquence peut être obtenue lorsque la synchronisation est effectuée par rupture de la porteuse de télé-alimentation car il est souhaitable de limiter la fréquence de coupure).

Cependant, les microcontrôleurs utilisés doivent générer des impulsions afin de déclencher chaque solénoïde dans un cycle de rafraîchissement, c'est-à-dire un cycle de détermination de la position et, le cas échéant, l'orientation de chaque élément mobile d'un ensemble d'éléments mobiles, compatible avec une utilisation temps réel du système. Une telle fréquence de rafraîchissement est, par exemple, de 60Hz. A cette fréquence, chaque cycle de rafraîchissement à une durée de 16ms. Des impulsions doivent donc être fournies par chaque microcontrôleur toutes les 16 ms, avec un décalage temporel pour le début de chaque impulsion, pour chaque circuit oscillant, qui dépend d'une fenêtre temporelle (ou timeslot en terminologie anglo-saxonne) attribuée à ce dernier. L'attribution d'une telle fenêtre temporelle peut être effectuée conformément à l'enseignement de la demande de brevet WO 2012/028827.

Chaque microcontrôleur ne recevant qu'une information basse fréquence, il doit avoir une base de temps qui lui est propre pour générer les impulsions toutes les 16ms et recaler cette base de temps dès la disponibilité du signal de synchronisation externe. Cela permet d'éviter une dérive trop importante de l'horloge interne du microcontrôleur.

Dans la situation où les horloges internes des éléments mobiles et de l'électronique de la surface de localisation n'ont pas exactement le même rythme, les éléments mobiles compensent leur horloge interne sur la base d'une comparaison de la durée mesurée entre deux informations consécutives de synchronisation avec une durée théorique et prédéterminée. Il est observé que plus cette durée est longue, plus la correction est précise. Ainsi, si la mesure de la durée est effectuée avec une précision P et sur une durée théorique et prédéterminée D, la précision de la compensation d'horloge du microcontrôleur est égale à P/D. A titre d'illustration, si la précision est P = 10µs et la durée est D = 1s, la précision obtenue est égale à 1e-5, soit potentiellement mille fois mieux que les +/-2e-2 typiques d'une horloge interne non calibrée d'un microcontrôleur.

Les modules de localisation peuvent également recevoir de l'énergie à partir de lignes et colonnes rayonnantes d'une surface de localisation, en particulier des lignes et colonnes utilisées pour recevoir des signaux de localisation provenant de modules de localisation.

La **figure 8f** illustre un exemple de module de localisation permettant de recevoir de l'énergie de lignes et colonnes d'une surface de localisation, utilisées pour recevoir des signaux de localisation provenant de modules de localisation. Comme illustré, le module de localisation 8500 est ici pourvu d'un commutateur 8505 permettant le rayonnement d'un solénoïde 8510 selon une configuration classique utilisée pour sa localisation. Dans cette configuration, un microcontrôleur 8515 génère un signal, par exemple périodique ayant une fréquence de 200KHz, en fonction d'une commande de synchronisation issue d'un module de synchronisation 8520. Le signal généré est amplifié dans un circuit oscillant 8525 et transmis vers le solénoïde 8510.

Le commutateur 8505 permet également d'utiliser le solénoïde 8510 comme récepteur d'énergie par couplage inductif, le solénoïde8510 étant, à ces fins, relié à un circuit d'energy harvesting 8530. A titre d'illustration, un tel circuit d'energy harvesting peut comprendre des diodes de redressement et une capacité permettant de stocker du courant pouvant être restitué ultérieurement.

Le commutateur 8505 permet enfin de laisser ouverte l'une des deux bornes du solénoïde 8510 de telle sorte qu'aucun courant ne puisse le traverser. Ce mode est notamment utile dans des phases durant lesquelles un élément mobile n'a pas besoin de plus d'énergie que celle qui a déjà été accumulée, il supprime ainsi sa perturbation induite sur le champ magnétique local. Cette énergie non captée devient alors disponible pour les éléments mobiles proches.

L'information de synchronisation est fournie par le module de synchronisation 8520 qui peut être, par exemple, un récepteur radio FM, notamment un récepteur FM capable de recevoir des signaux ayant une fréquence autour de 433MHz. Une information de synchronisation doit être utilisée pour indiquer au microcontrôleur s'il doit être en mode de localisation, d'acquisition d'énergie ou « ouvert ». Cette information peut être transmise sous la forme d'un train binaire par un microcontrôleur de la surface de localisation.

Il est observé ici que le protocole RFID utilise une porteuse HF (sigle de Haute Fréquence) qui si elle est émise en permanence, peut perturber le processus de localisation des éléments mobiles par la surface de localisation. Afin de supprimer ou à tout le moins réduire cet effet, la porteuse RFID est, selon un mode de réalisation particulier, émise en permanence avec une fréquence d'environ 13,56 MHz. Par ailleurs, la mise en œuvre d'un ou plusieurs filtres passe-bas en entrée de la surface de détection permet de rejeter cette fréquence tout en laissant passer le signal provenant des modules de localisation.

Selon d'autres réalisations, la porteuse RFID n'est émise que durant un ou plusieurs intervalles de temps de chaque cycle de rafraîchissement, les modules de localisation des éléments mobiles étant activés en dehors de ces intervalles de temps, sans risque de perturbation.

Par ailleurs, afin de réduire sa consommation électrique, un élément mobile peut mettre en veille son électronique durant l'intervalle de temps de chaque cycle de rafraîchissement (fixe et répétitif), durant lequel il ne doit pas activer son module de localisation ni transmettre de données.

Selon un mode de réalisation particulier, certains éléments mobiles n'activent pas leurs modules de localisation à chaque cycle de rafraîchissement, noté ici T1, mais selon un multiple, noté N, de ce cycle, c'est-à-dire selon un cycle NxT1. Un tel mode de réalisation est notamment adapté à des éléments mobiles destinés à être rarement déplacés sur la surface de localisation. Cela a également pour effet de permettre la réduction de la consommation électrique de ces éléments mobiles qui peuvent, en régime synchronisé, mettre en veille leurs composants consommateurs, y compris ceux en charge de la réception d'un signal de synchronisation, durant un intervalle de temps au moins égal à $(N-1) \times T1$. Le facteur de réduction de la consommation électrique est alors de l'ordre N.

Toujours selon un mode de réalisation particulier, le signal commun de synchronisation peut comprendre au moins deux signaux distincts notés ici SyncA et SyncB, différentiables par les éléments mobiles. A titre d'illustration, le signal SyncA est émis selon un cycle de N cycles de durée T1 alors que le signal SyncB est émis à chaque cycle de durée T1. Ainsi, lorsqu'un index de retard égal à M, avec $0 < M < N$, est attribué à un élément mobile, celui-ci est activé tous les N cycles, à un instant MxT1 suivant la réception du signal SyncA.

Il est observé ici que si, en théorie, un élément mobile n'a besoin que du signal SyncA, en pratique, l'utilisation du signal SyncB est préférable, lorsque la valeur de M est non nulle, pour augmenter la précision de l'ordonnancement d'activation des éléments mobiles.

Ainsi, par exemple, en référence à la figure 8h, concernant le module 3 (activé lorsque M = 2) et un timeslot égal à trois, le module attend, lors de l'initialisation, la réception du signal SyncA puis se met en état de veille durant un temps inférieur à 2xT1. En fin de veille, il attend le signal SyncB puis attend une durée égale trois timeslots pour activer une émission électromagnétique (c'est-à-dire, typiquement, pour exciter un solénoïde). Il se remet alors en état de veille jusqu'à un instant précédent la réception du signal SyncB du cycle NxT1 suivant. A partir de cet instant, il n'est, en théorie, plus nécessaire, pour l'élément mobile, d'attendre le signal SyncA. Cependant, pour écarter de potentiels problèmes de désynchronisation, l'élément mobile peut avantageusement vérifier de temps en temps, par exemple une fois par seconde, que la réception du signal SyncA se situe bien à l'instant prévu dans son cycle NxT1. Si une dérive est observée, l'élément mobile refait, de préférence, le cycle de synchronisation complet à partir de la réception du signal SyncA.

Les signaux de synchronisation sont, par exemple, transmis par modulation en fréquence d'une porteuse radio. A titre d'illustration, les signaux SyncA et SyncB sont des signaux à impulsions carrées de durée différente.

La **figure 8h** représente un exemple de chronogramme de synchronisation lorsque deux signaux de synchronisation SyncA et SyncB sont utilisés. Le signal SyncA est ici émis selon un cycle de N cycles de durée T1 alors que le signal SyncB est émis à chaque cycle de durée T1, avec T1 = 25ms et N = 4. Le signal SyncA est ici à impulsions carrées de durée d'une milliseconde tandis que le signal SyncB est à impulsions carrées de durée d'une milliseconde et demie.

Le chronogramme représenté vise l'activation de quatre éléments mobiles comprenant chacun un module de localisation. Ces éléments mobiles partagent ici le même timeslot et ont des index M de retard égaux à 0, 1, 2 et 3, respectivement.

Toujours selon un mode de réalisation particulier, la surface de localisation ainsi que chacun des éléments mobiles comprennent un système électronique capable d'implémenter la fonctionnalité connue sous le nom de MultiCeiver du protocole connu sous le nom d'Enhanced Shockburst (MultiCeiver et Enhanced Shockburst sont des marques), cette fonctionnalité permettant de réaliser le signal commun de synchronisation.

Cette fonctionnalité peut notamment être mise en œuvre à l'aide composant électronique ayant la référence nRF24LE1 de Nordic Semiconductor. Conformément à ce mode de réalisation, le circuit nRF24LE1 de la surface de localisation émet les signaux de synchronisation SyncA et SyncB de la façon suivante :

- chacun des éléments mobiles réserve une adresse logique ALSYNC de valeur prédéterminée et identique pour tous les éléments mobiles, cette adresse est ici réservée dans une interface de communication appelée « data pipe 0 » ;
- le circuit nRF24LE1 de la surface de localisation transmet vers l'adresse ALSYNC, à chaque cycle de rafraîchissement T1, un paquet de données comprenant au moins un octet. Pour le signal de synchronisation SyncA, le premier octet du paquet de données a une première valeur prédéterminée et, pour le signal de synchronisation SyncB, le premier octet du paquet de données a une seconde valeur, distincte de la première valeur utilisée pour le signal de synchronisation SyncA ;

- du côté des éléments mobiles, la réception de chacun de ces signaux produit, avec un délai constant, une interruption matérielle qui indique l'instant précis de la synchronisation. En outre, en lisant le premier octet du paquet de données reçu, le logiciel du circuit nRF24LE1 détermine s'il s'agit du signal de synchronisation SyncA ou SyncB.

A titre d'illustration, les modules de localisation peuvent être intégrés dans des dispositifs mobiles tels que des robots ou des jouets, par exemple des voitures ou des hélicoptères. L'acquisition en temps réel de la position et l'orientation d'un dispositif mobile ainsi que le contrôle d'actuateurs de ce dernier permettent de le diriger automatiquement, par exemple pour lui faire suivre des trajectoires particulières pouvant notamment être définies par un logiciel applicatif. A ces fins, le logiciel applicatif utilisé et qui s'exécute sur un calculateur, par exemple un ordinateur de type PC (sigle de Personal Computer en terminologie anglo-saxonne), un smartphone ou une tablette, peut transmettre des commandes de contrôle via une interface de type SDK (sigle de Software Development Kit en terminologie anglo-saxonne). De telles commandes de contrôle sont, par exemple, un sens et une vitesse de rotation de moteurs. Elles sont codées et transmises au lecteur de type RFID utilisé qui peut alors les transmettre sous forme d'un signal de type RFID, dans une instruction d'écriture, à un circuit de type RFID d'un module de localisation.

Un microcontrôleur de ce dernier peut alors les lire dans la mémoire du circuit de type RFID en utilisant, par exemple, un bus I2C. Ces commandes ou des données représentatives de ces commandes sont, de préférence, mémorisées à des emplacements prédéterminés du circuit de type RFID. Le microcontrôleur du module de localisation est ici muni de sorties, par exemple des sorties de type PWM, permettant de contrôler des actuateurs tels que des moteurs à partir des informations mémorisées dans le circuit de type RFID. Naturellement, pour satisfaire des besoins spécifiques, une personne compétente dans le domaine de l'invention pourra appliquer des modifications dans la description précédente. En particulier, si l'invention est, aux fins d'illustration, décrite, en particulier, en référence au protocole RFID, l'invention n'est pas limitée à la mise en œuvre de celui-ci.

## ACTIVATION ET LOCALISATION DES ELEMENTS MOBILES

Comme décrit précédemment, les modules de localisation à activer peuvent être identifiés de façon analogique ou numérique. L'identification analogique d'un module de localisation peut s'effectuer par l'envoi d'une fréquence dédiée, selon plusieurs modes, en particulier selon une fréquence de porteuse spécifique pour chaque module de localisation (cette fréquence identifie le module de localisation qui est activé). L'électronique embarquée réagit donc sur la porteuse spécifique qui lui correspond. Alternativement, une fréquence unique de porteuse peut être utilisée pour tous les modules de localisation. Cette fréquence module un signal utile qui est reçu par chaque module de localisation. C'est la valeur de la fréquence modulée de ce signal utile qui permet l'identification module de localisation à détecter. Les fréquences d'activation de chaque module de localisation sont, par exemple, définies en usine lors de leur assemblage et sont configurées dans le module de pilotage de détection et de capture de position de façon logicielle.

L'identification numérique d'un module de localisation s'effectue par la transmission d'un code, typiquement sur plusieurs bits, dans un message d'activation. Ce mécanisme d'identification permet une plus grande souplesse d'utilisation car il permet la programmation (et donc la modification) de l'identification de chaque module de localisation.

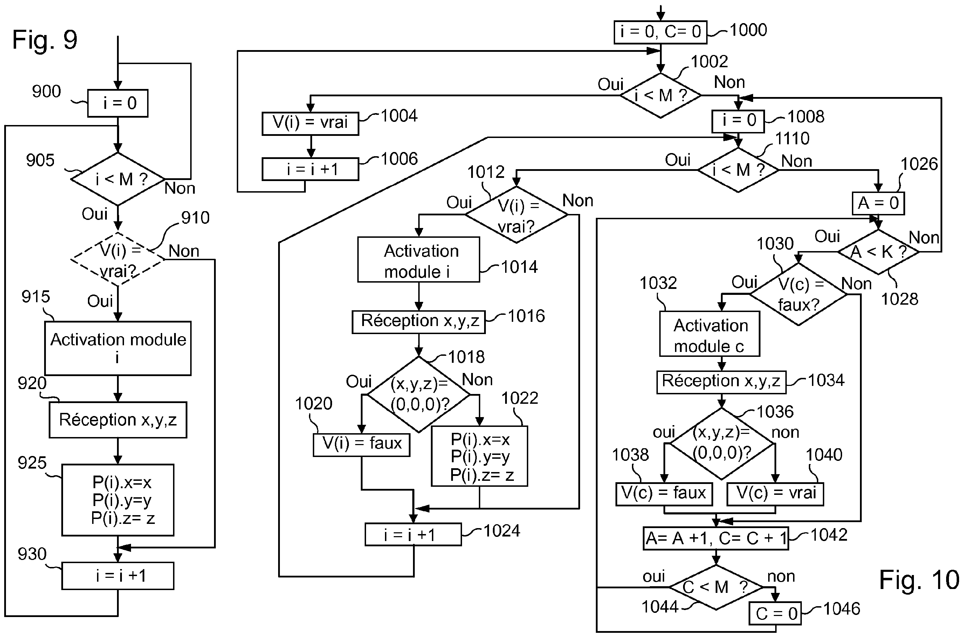

La **figure 9** illustre un premier exemple d'algorithme pouvant être utilisé pour activer séquentiellement un ensemble de modules de localisation et calculer les positions et/ou orientations des dispositifs mobiles correspondants.

Une première étape consiste ici à initialiser une variable i, représentant un index sur des modules de localisation, à la valeur zéro (étape 900). Dans une étape suivante (étape 905), la valeur de la variable i est comparée à la valeur d'une constante M représentant le nombre de modules de localisation supportés par le système. Typiquement, l'ordre de grandeur de la constante M est de cent. Si la valeur de la variable i est supérieure ou égale à celle de la constante M, la variable i est réinitialisée (étape 900).

Si, au contraire, la valeur de la variable i est inférieure à celle de la constante M, un test est effectué pour déterminer si le module de localisation ayant l'index i est utilisé (étape 910), c'est-à-dire si le module de localisation ayant l'index i est valide. La validité des modules de localisation peut être mémorisée dans un tableau qui peut être mis à jour par une application utilisant l'interface formée par les dispositifs mobiles comprenant ces modules de localisation et le système de localisation de ces modules. Comme illustré par l'utilisation de trait pointillé, cette étape est optionnelle.

Si le module de localisation correspondant à l'index i est valide, ce module est activé (étape 915). Comme décrit précédemment, l'activation du module de localisation ayant l'index i consiste, par exemple, à émettre un signal dont la porteuse a une fréquence caractérisant un identifiant de ce module de localisation.

Lorsque le module de localisation ayant l'index i est activé, il émet un champ électromagnétique permettant sa localisation par mesure de tensions induites dans des boucles de la surface de détection comme indiqué précédemment.

Le module de pilotage de détection et de capture de position est alors en mesure de calculer la position du module de localisation activé (étape 920).

Ces informations sont mémorisées pour être exploitées par le module de calcul (étape 925). Elles peuvent notamment être mémorisées dans un tableau de position des modules de localisation à partir duquel peuvent être estimées les positions et/ou orientations des dispositifs mobiles comprenant ces modules de localisation.

La variable i est alors incrémentée de un (étape 930) et les étapes précédentes sont répétées (étapes 905 à 930) jusqu'à ce que les positions de tous les modules de localisation (ou modules valides de localisation) aient été déterminées.

De même, si le module de localisation correspondant à l'index i n'est pas valide (étape 910), la variable i est incrémentée de un (étape 930) et les étapes précédentes sont répétées (étapes 905 à 930) jusqu'à ce que les positions de tous les modules de localisation (ou modules valides de localisation) aient été déterminées.

La position et/ou l'orientation de chaque dispositif mobile sont calculées à partir des positions des modules de localisation. Ce calcul peut être effectué lorsque les positions de tous les modules valides de localisation ont été calculées ou, dispositif mobile par dispositif mobile, lorsque les positions de tous les modules valides de localisation appartenant à un même dispositif mobile ont été calculées.

Il est observé ici que la validité de modules de localisation peut notamment être liée à la logique de l'application utilisant l'interface formée par les dispositifs mobiles comprenant ces modules de localisation et le système de localisation de ces modules. A titre d'illustration, dans le cas d'un jeu, les modules non valides de localisation peuvent correspondre à des dispositifs mobiles représentant des pions non utilisés dans la partie, par exemple des pièces ayant été prises lors d'une partie d'échecs ou des pions non utilisés dans un scénario de jeu donné.

La **figure 10** illustre un second exemple d'algorithme pouvant être utilisé pour activer séquentiellement un ensemble de modules de localisation et calculer les positions et/ou orientations des dispositifs mobiles correspondants.

Cet algorithme permet notamment de gérer le fait que certains dispositifs mobiles peuvent quitter la zone d'évolution (c'est-à-dire ici la surface de détection) et que les positions et/ou orientations des dispositifs mobiles correspondants ne nécessitent plus d'être estimées. Une boucle logicielle secondaire surveille cependant leur possible réintégration sur la surface de détection et le besoin induit d'estimer à nouveau leurs positions et/ou orientations. Cet algorithme permet, en comparaison avec l'algorithme décrit en référence à la figure 9, de réduire la durée globale de la séquence d'activation de l'ensemble des modules de localisation en gérant dynamiquement leur validité.

Dans cet algorithme, la constante M correspond au nombre maximum de modules de localisation supportés par le système, la variable i caractérise l'index d'un module de localisation, le tableau P correspond au tableau de positions des modules de localisation, le tableau V correspond au tableau de validité des modules de localisation, la variable C est une variable globale correspondant au nombre total de modules de localisation utilisés, K est une constante prédéterminée correspondant au nombre maximal d'itérations de recherche de modules de localisation hors surface de détection (une valeur typique pour K est de l'ordre d'une dizaine) et A est une variable représentant un index de décompte des itérations de recherche des modules de localisation situés hors surface de détection pour un cycle global.

Une première étape a pour objet d'initialiser les variables i et C à zéro (étape 1000). Dans une étape suivante la valeur de la variable i est comparée à celle de la constante M (étape 1002). Si la valeur de la variable i est inférieure à celle de la constante M, le tableau de validité des modules de localisation est mis à jour de telle sorte que le module de localisation correspondant à l'index i soit considéré comme valide (étape 1004). La variable i est alors incrémentée de un (étape 1006) et la nouvelle valeur de la variable i est comparée à celle de la constante M (étape 1002). Les étapes 1002 à 1006 permettent d'initialiser le tableau de validité des modules de localisation.

Si, au contraire, la valeur de la variable i est supérieure ou égale à celle de la constante M, la variable i est réinitialisée à zéro (étape 1008). Dans une étape suivante la valeur de la variable i est à nouveau comparée à celle de la constante M (étape 1010). Si la valeur de la variable i est inférieure à celle de la constante M, un test est effectué pour déterminer si le module de localisation correspondant à l'index i est valide (étape 1012).

Si le module de localisation correspondant à l'index i est valide, ce module est activé (étape 1014) de telle sorte qu'il émette un champ électromagnétique permettant sa localisation par mesure de tensions induites dans des boucles de la surface de détection.

Le module de pilotage de détection et de capture de position est alors en mesure de calculer la position et, le cas échéant, l'orientation du module de localisation activé (étape 1016).

Un test est alors effectué sur les coordonnées obtenues du module de localisation (étape 1018). Si ces coordonnées sont nulles, le tableau de validité des modules de localisation est mis à jour de telle sorte que le module de localisation correspondant à l'index i soit considéré comme non valide (étape 1020). Dans le cas contraire, si ces coordonnées ne sont pas nulles, ces coordonnées sont mémorisées pour être exploitées par le module de calcul (étape 1022). Elles peuvent notamment être mémorisées dans le tableau de positions des modules de localisation à partir duquel peuvent être estimés les positions et/ou orientations des dispositifs mobiles comprenant ces modules de localisation, comme décrit précédemment.

La variable i est alors incrémentée de un (étape 1024) et sa valeur est à nouveau comparée à celle de la constante M (étape 1010).

De même, si le module de localisation correspondant à l'index i n'est pas valide (étape 1012), la variable i est incrémentée de un (étape 1024) et sa valeur est à nouveau comparée à celle de la constante M (étape 1010).

Si la valeur de la variable i est supérieure ou égale à celle de la constante M (étape 1010), la valeur de la variable A est initialisée à la valeur zéro (étape 1026). Un test est alors effectué pour comparer la valeur de la variable A à celle de la constante K (étape 1028). Si la valeur de la constante K est inférieure ou égale à celle de la variable A, la valeur de la variable i est réinitialisée à zéro (étape 1008) et les étapes décrites précédemment sont répétées.

Dans le cas contraire, un test est effectué pour déterminer si le module de localisation correspondant à un index dont la valeur est égale à C est non valide (étape 1030).

Dans l'affirmative, ce module est activé (étape 1032) de telle sorte qu'il émette un champ électromagnétique permettant sa localisation, par exemple par mesure de tensions induites dans des boucles de la surface de détection.

Le module de pilotage de détection et de capture de position est alors en mesure de calculer la position du module de localisation activé (étape 1034).

Un test est alors effectué sur les coordonnées obtenues du module de localisation (étape 1036). Si ces coordonnées sont nulles, le tableau de validité des modules de localisation est mis à jour de telle sorte que le module de localisation correspondant à l'index dont la valeur est égale à celle de la variable C soit considéré comme non valide (étape 1038). Dans le cas contraire, le tableau de validité des modules de localisation est mis à jour de telle sorte que le module de localisation correspondant à l'index dont la valeur est égale à celle de la variable C soit considéré comme valide (étape 1040).

Les valeurs des variables A et C sont alors incrémentées de un (étape 1042). De même, si le module de localisation correspondant à un index dont la valeur est égale à celle de la variable C n'est pas non valide (étape 1030), les valeurs des variables A et C sont alors incrémentées de un (étape 1042).

Un test est alors effectué pour comparer la valeur de la variable C à celle de la constante M (étape 1044). Si la valeur de la variable C est inférieure à celle de la constante M, les valeurs de la variable A et de la constante K sont comparées (étape 1028) et les étapes décrites précédemment sont répétées.

Si la valeur de la variable C est supérieure ou égale à celle de la constante M, la valeur de la variable C est réinitialisée à la valeur zéro (étape 1046). Les valeurs de la variable A et de la constante K sont alors comparées (étape 1028) et les étapes décrites précédemment sont répétées.

## COMMANDE DU DISPOSITIF D'ACCUEIL

De retour au contexte de la figure 5, il est supposé qu'au moins un dispositif mobile est disposé sur un dispositif d'accueil ou à proximité de celui-ci. Le dispositif mobile peut être posé sur une surface supérieure du dispositif d'accueil (ou surface d'interaction) ou se trouver à proximité de celle-ci. Il est considéré que le dispositif mobile est à proximité du dispositif d'accueil ou à proximité d'une surface supérieure de celui-ci lorsque le dispositif mobile est assez proche de la couche de détection du dispositif d'accueil pour que le champ magnétique émis par le dispositif mobile (ou plus précisément émis par un module de localisation de celui-ci) puisse être détecté.

Un utilisateur manipule le dispositif mobile et imprime à celui-ci un mouvement par rapport à la surface supérieure du dispositif d'accueil. En fonction du mouvement du dispositif mobile, le dispositif d'accueil détermine une commande à exécuter.

A cet effet, pour chaque dispositif mobile à proximité du dispositif d'accueil, celui-ci stocke dans un historique glissant des positons de leur(s) module(s) de localisation. Par exemple, cette position comporte l'abscisse et l'ordonnée du dispositif mobile par rapport à la surface d'interaction. Celles-ci sont par exemple définies en fonction des points d'impact du champ électromagnétique sur la surface de détection. La position peut en outre comporte la distance entre le dispositif mobile et la surface d'interaction (c'est-à-dire son altitude). Celle-ci peut être définie en fonction des variations de la puissance électromagnétique mesurée.

Lorsque le dispositif d'accueil dispose de l'évolution du mouvement du dispositif mobile dans l'historique sur une fenêtre temporelle (par exemple de l'ordre de la seconde), il est alors possible de comparer la forme du mouvement à un schéma d'évolution (ou modèle) de référence à reconnaître. Chaque schéma d'évolution est associé à un mouvement de référence (c'est-à-dire un geste opéré par l'utilisateur avec le dispositif mobile).

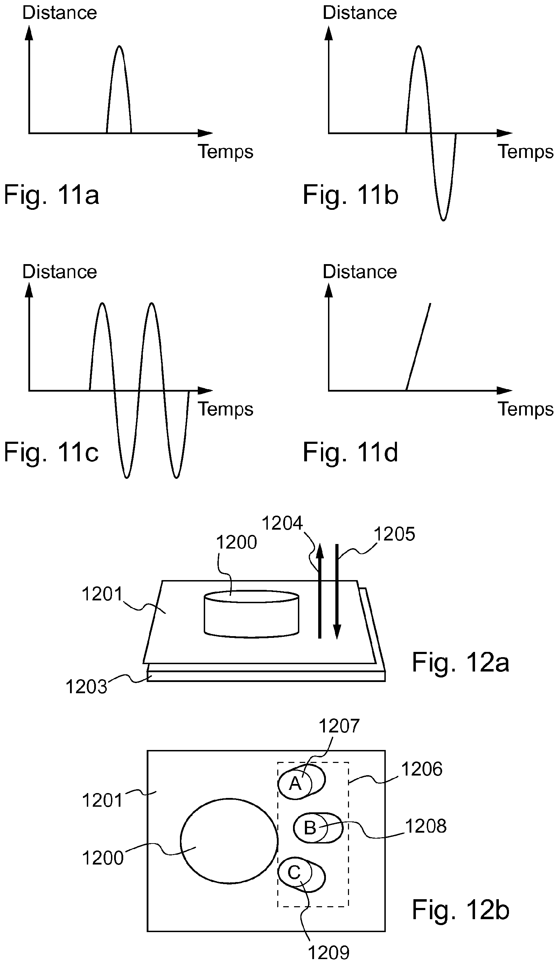

La **figure 11a** illustre un mouvement de clic. Dans ce mouvement, l'utilisateur relève et repose de manière rapide le dispositif mobile par rapport à la station d'accueil. La station d'accueil détecte alors une variation rapide d'altitude dans un sens puis dans l'autre (éloignement de la station d'accueil puis rapprochement). Par exemple, cette variation se fait dans un temps de l'ordre de la demi-seconde ou inférieur. La figure 11a est un graphe présentant le schéma d'évolution de référence associé au mouvement de clic, montrant l'évolution de l'altitude du dispositif mobile par rapport à la station d'accueil dans le temps.

La **figure 11b** illustre un mouvement d'aller-retour. Dans ce mouvement, l'utilisateur éloigne rapidement puis rapproche rapidement le dispositif mobile d'une position initiale tout en restant dans le même plan de la surface d'interaction avec le dispositif d'accueil. La figure 11b est un graphe présentant le schéma d'évolution de référence associé au mouvement d'aller-retour, montrant l'évolution de la distance, dans un plan parallèle à la surface d'interaction du dispositif d'accueil, entre la position du dispositif mobile et une position initiale.

La **figure 11c** illustre un mouvement de secousse. Dans ce mouvement, l'utilisateur fait plusieurs mouvements d'aller-retour successifs avec le dispositif mobile. La figure 11c est un graphe présentant le schéma d'évolution de référence associé au mouvement de secousse, montrant l'évolution de la distance, dans un plan parallèle à la surface d'interaction du dispositif d'accueil, entre la position du dispositif mobile et une position initiale.

La **figure 11d** illustre un mouvement de glissade. Dans ce mouvement, l'utilisateur fait effectuer au dispositif mobile un déplacement rectiligne dans un plan parallèle au plan d'interaction du dispositif d'accueil. La figure 11d est un graphe présentant le schéma d'évolution de référence associé au mouvement de glissade, montrant l'évolution de la distance parcourue par le dispositif mobile dans un plan parallèle à la surface d'interaction du dispositif d'accueil.

Certains dispositifs mobiles peuvent comporter une pluralité de modules de localisation, par exemple contenant des solénoïdes, pour générer des champs magnétiques inducteurs. Il est ainsi possible de déterminer pour ces dispositifs mobiles, leur orientation selon un axe orthogonal à la surface d'interaction du dispositif d'accueil. Un mouvement de rotation imprimé par un utilisateur à un dispositif mobile peut donc être détecté par le dispositif d'accueil.

Lorsque l'un ou plusieurs des mouvements évoqué ci-dessus, ou d'autres, est détecté, il est associé à une commande du dispositif d'accueil.

Par exemple, le clic peut permettre d'activer une action prédéfinie ou de valider un choix dans un menu affiché à l'utilisateur.

La secousse peut par exemple permettre d'annuler ou activer une action en cours (c'est-à-dire faire une opération de type « undo » typiquement présente dans les applications informatiques).

Par exemple encore, la glissade peut permettre d'effectuer une sélection ou de faire varier une valeur d'un curseur.

La rotation peut par exemple permettre d'effectuer une sélection parmi une pluralité éléments contextuels affichés à un utilisateur ou de faire varier une valeur d'un curseur curviligne (à la manière d'un potentiomètre).

Des mouvements peuvent être combinés pour offrir des interfaces d'un genre nouveau, reposant sur l'usage exclusif d'objets et sans nécessiter l'usage d'un écran tactile associé ou bien d'un clavier et d'une souris. De tels objets peuvent toutefois être utilisés en complément.

Des exemples de mise en œuvre de commandes du dispositif d'accueil sont décrits dans la suite en référence aux figures 12a à 12g.

Comme illustré sur la **figure 12a,** un dispositif mobile 1200 est sur un écran 1201 lui-même superposé au-dessus d'un dispositif d'accueil 1203. L'écran peut faire partie du dispositif d'accueil. Alternativement, le dispositif mobile peut être disposé sur le dispositif d'accueil et l'écran être déporté, c'est à dire non intégré au dispositif d'accueil.

Lorsqu'un utilisateur effectue un clic avec le dispositif mobile en relevant le dispositif vers le haut (flèche 1204) puis en le reposant (flèche 1205), le dispositif d'accueil le détecte et exécute une commande associée à ce mouvement.

Par exemple, il s'agit de l'affichage d'un menu 1206 comme illustré par la **figure 12b.** Ce menu s'affiche par exemple autour de la position du pion. Par exemple encore, ce menu comporte des éléments contextuels 1207, 1208, 1209 tels que des icônes ou du texte.

Alternativement, ou en combinaison, l'exécution de la commande associée au mouvement ne s'accompagne pas d'un affichage, mais s'accompagne d'un déclenchement d'un son ou d'un élément lumineux associé à la commande. L'élément lumineux peut être disposé au niveau de la surface d'interaction ou sur le dispositif distant.

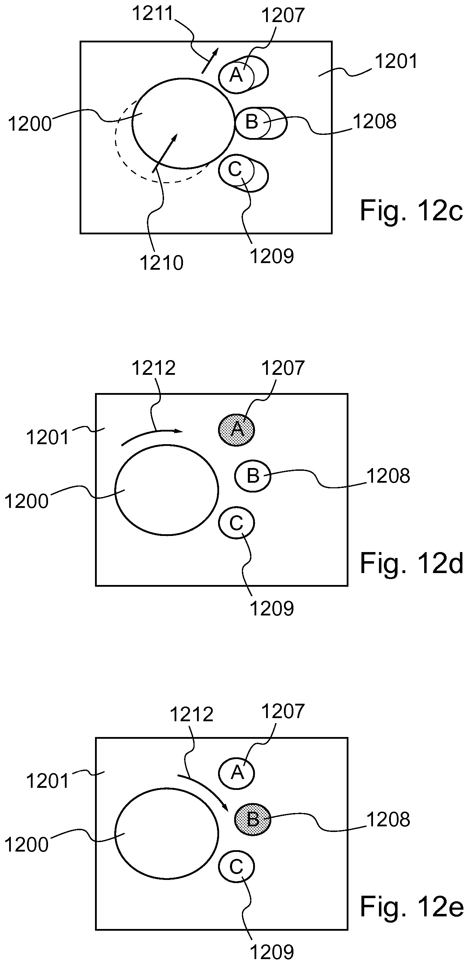

Pour sélectionner un élément contextuel, il est par exemple possible de mettre en œuvre un mouvement de glissade, comme illustré sur la **figure 12c.** Par exemple, l'utilisateur déplace le dispositif mobile en direction de l'élément 1207 (flèche 1210). Afin d'offrir un retour visuel à l'utilisateur, l'élément 1207 peut par exemple être affiché comme s'enfonçant dans une fente, comme poussé par le pion (flèche 1211).

La **figure 12d** illustre la sélection d'un élément contextuel au moyen d'un clic et d'une rotation. Le dispositif mobile se trouve par exemple orienté vers l'élément contextuel 1207. Cet élément se trouve alors en surbrillance. Ensuite, comme illustré par la **figure 12e,** l'utilisateur imprime au dispositif mobile un mouvement de rotation selon un axe orthogonal à l'écran 1200 (flèche 1212) en direction d'un autre élément contextuel, par exemple l'élément 1208. Cet élément se trouve alors en surbrillance et l'élément 1207 retrouve un aspect initial (pas de surbrillance).

Pour valider la sélection de l'élément 1208 et pour déclencher l'action ou la commande associée, l'utilisateur peut ensuite effectuer un mouvement de clic.

Alternativement, la validation peut s'effectuer de façon passive en laissant le dispositif mobile immobile pendant quelques secondes après avoir sélectionné l'élément contextuel, sans nécessité de combiner avec un mouvement de clic.

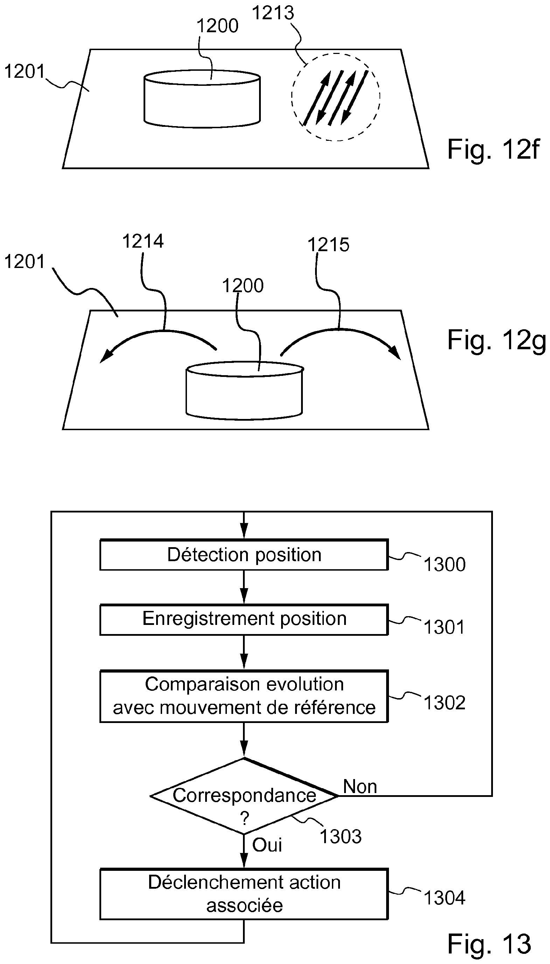

En référence à la **figure 12f,** il est décrit une mise en œuvre du mouvement de secousse pour activer une commande d'annulation d'action. Cette annulation permet de revenir sur une action entreprise par l'utilisateur afin de retourner à l'état dans lequel était le dispositif d'accueil avant l'action de l'utilisateur. Par exemple, l'utilisateur imprime au dispositif mobile un mouvement d'aller-retour ou de secousse (flèche 1213). Le système revient alors à l'état antérieur à l'activation de l'action d'annulation.

Les formes d'utilisation de mouvements (ou gestes) imprimés aux dispositifs mobiles ne sont pas limitées à celles présentées ci-dessus. Il est possible d'en prévoir d'autres. En outre, les combinaisons de mouvement présentées ne sont pas limitatives, il est possible de les modifier ou d'en prévoir d'autres. En outre, les associations entre les mouvements et les commandes (ou actions) présentées ci-dessus ne sont pas limitatives.

En particulier, l'activation d'une action peut se faire par détection d'un mouvement de clic seul sans combinaison avec d'autres gestes. C'est par exemple le cas lorsque l'action associée à un dispositif mobile est unique et ne justifie donc pas un choix parmi plusieurs options. Le mouvement de clic peut déclencher immédiatement l'action unique associée au dispositif mobile.

En référence à la **figure 12g,** il est décrit un mouvement permettant d'annuler une action ou d'en rétablir une action. Lorsque l'utilisateur à enclenché une action par un mouvement du dispositif mobile, il peut l'annuler en effectuant un demi-cercle vers la gauche (flèche1214) avec le dispositif mobile. L'action enclenchée est alors annulée. Si après avoir annulé cette action, l'utilisateur souhaite la rétablir, c'est-à-dire annuler l'annulation, il peut effectuer un demi-cercle vers la droite (flèche 1215) avec le dispositif mobile.

La **figure 13** est un organigramme d'étapes mises en œuvre au sein du dispositif d'accueil selon des modes de réalisation.

Dans une première étape 1300, la position courante d'un dispositif mobile est déterminée. Il peut s'agir de sa distance par rapport à la surface d'interaction du dispositif d'accueil, et/ou ses coordonnées dans un repère associé à cette surface et/ou une orientation du dispositif mobile selon un axe orthogonal à cette surface. L'étape 1300 peut être déclenchée par la réception d'un signal d'activation de la part du dispositif mobile.

Une fois la position détectée, elle est enregistrée lors d'une étape 1301 dans un historique des positions du dispositif mobile. Cet historique porte sur une fenêtre temporelle glissante, c'est-à-dire que l'historique comporte les dernière positions détectées sur une période de temps donnée, par exemple quelques secondes, et que chaque nouvelle position efface la position la plus ancienne.

L'historique des positions permet à chaque instant de comparer lors d'une étape 1302, l'évolution de ces positions, c'est-à-dire le mouvement du dispositif mobile, à des mouvements de référence comme discuté ci-dessus (clic, aller-retour, secousse, rotation ou autre).

S'il est déterminé lors d'une étape 1303 que le mouvement du dispositif mobile ne correspond pas à un mouvement de référence (NON), le processus retourne à l'étape 1300. Sinon (OUI), une commande (ou action) associée à ce mouvement de référence est déclenchée lors d'une étape 1304.

Selon des réalisations, un système à réseau de neurones est utilisé pour reconnaître les mouvements de référence. Par exemple, les mouvements de référence sont identifiés par le système par apprentissage à partir de mouvements du dispositif mobile. Lors de cet apprentissage un état, ou une signature, du réseau de neurone peut être identifié(e) par le système qui l'associe à un mouvement de référence. Par la suite, lorsque ce mouvement est répété, il place de nouveau le réseau de neurones dans le même état ce qui permet de reconnaître le mouvement de référence.

Dans ce type de réalisations, il n'est pas effectué une comparaison position par position entre celles du mouvement de référence à reconnaître et celles du mouvement qui vient d'être effectué et stocké dans l'historique. Il s'agit plutôt de comparer un état courant du réseau de neurone (ou signature) avec un état (ou signature) de référence.

## DISPOSITIFS MOBILES A INTERFACE

Les dispositifs mobiles peuvent comporter une ou plusieurs interfaces utilisateur permettant de déclencher l'envoi de signaux à destination du dispositif d'accueil.

Par exemple, un microcontrôleur dans le dispositif mobile permet de gérer les modules de localisation (contenant par exemple des oscillateurs reliés à des solénoïdes) et dispose de plusieurs entrées numériques qu'il est possible de relier à un ou plusieurs types d'interrupteurs disposés sur le dispositif mobile : un bouton poussoir, une glissière, une molette ou autre.

Le microcontrôleur peut par ailleurs encoder des informations transmises au dispositif d'accueil via des protocoles de communication tels que déjà décrits ci-avant, par exemple le protocole RFID.

Néanmoins, d'autres modes de communication peuvent être envisagés.

Par exemple, il est possible d'exploiter la technologie « *capacitive sensing* » qui permet d'implémenter de telles interfaces (boutons poussoirs, glissières, molettes ou autre) par une zone de contact à la surface du dispositif mobile ou très proche de la surface et qui permet de réagir au contact de la peau de l'utilisateur. Cette technologie peut être gérée par microcontrôleur et présente l'avantage de proposer une solution non-mécanique et résistante à l'usure.

Par exemple encore, le microcontrôleur envoie une information vers le dispositif d'accueil en faisant varier le temps d'activation du solénoïde qu'il comporte. Par exemple, lorsque l'interface du dispositif mobile n'est pas mise en action, ce temps d'activation a une durée différente de celle qu'il a lorsque l'interface est en action. Ainsi, par exemple, si le dispositif mobile dispose d'un bouton poussoir, et que celui-ci est enfoncé, le temps d'activation du solénoïde est différent de celui lorsque le bouton poussoir n'est pas activé. A titre d'illustration, le temps d'activation peut passer de 1 ms à 1,5 ms lorsque l'interface est mise en action.

Selon un autre exemple, le microcontrôleur envoie un signal PWM (sigle de Pulse Width Modulation en anglais) vers un amplificateur rayonnant pour changer la fréquence d'émission du solénoïde du dispositif mobile. A titre d'illustration, le temps d'activation peut passer de 200 kHz à 210 kHz lorsque l'interface est mise en action.

D'autres exemples sont possibles, comme l'envoi d'une trame binaire en modulant le signal émis par le solénoïde.

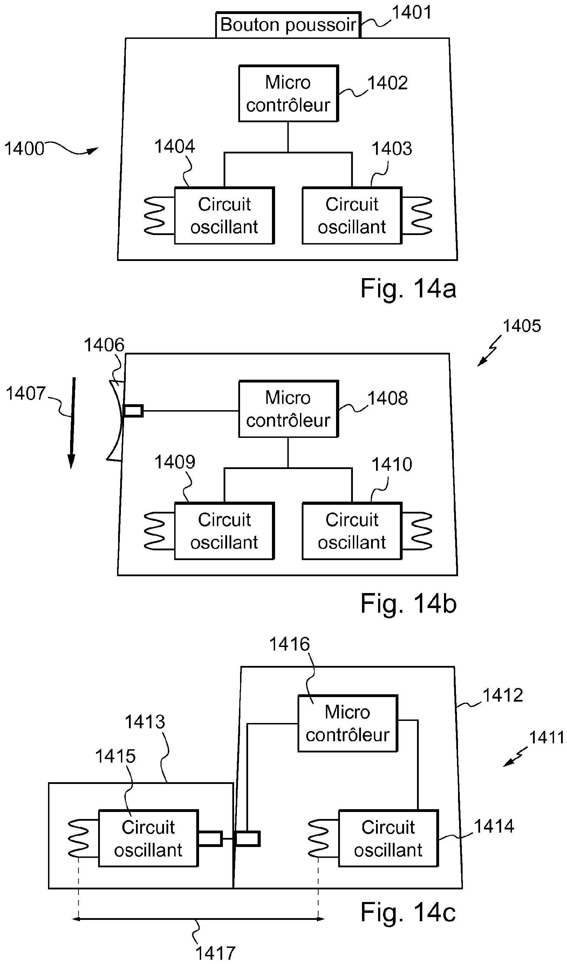

La **figure 14a** illustre un dispositif mobile 1400 comportant un bouton poussoir 1401, par exemple disposé au sommet du dispositif mobile. Par exemple, lorsque le bouton poussoir est enclenché, un signal est envoyé par le dispositif mobile à destination de la station d'accueil pour déclencher une détection de position.

Par exemple encore, lorsque le bouton poussoir est enclenché, un signal est envoyé, par le dispositif mobile à destination de la station d'accueil, qui est assimilé par le dispositif d'accueil à un mouvement de clic. Le bouton poussoir sert alors d'interface alternative ou d'interface complémentaire.

Le bouton poussoir est par exemple géré par un microcontrôleur 1402 chargé de gérer aussi des modules de localisation avec circuits oscillants 1403, 1404 (solénoïdes ou autre).

La **figure 14b** illustre un dispositif mobile 1405 comportant une glissière ou une molette 1406, par exemple disposée sur une face latérale du dispositif mobile. Par exemple, lorsque la glissière est enclenchée, un signal représentatif de la position de la glissière dans sa course (flèche 1407) est envoyé par le dispositif mobile à destination de la station d'accueil.

La glissière peut servir d'interface alternative ou d'interface complémentaire. Les commandes associées à la glissière peuvent par exemple être un « zoom/dezoom », la translation avant/arrière de l'image, ou autre. La glissière ou la molette peut permettre d'envoyer une information encodée entre un minimum et un maximum au dispositif d'accueil. Il est alors possible d'associer une commande spécifique à cette variation de valeur.

La glissière est par exemple géré par un microcontrôleur 1408 chargé de gérer aussi des modules de localisation avec circuits oscillants 1409, 14010 (solénoïdes ou autre).

La **figure 14c** illustre un dispositif mobile 1411 comportant un corps principal 1412 et un corps secondaire 1413. Le corps principal comporte un module de localisation 1414 (par exemple avec un solénoïde) et le corps secondaire comporte un module de localisation 1415 (par exemple avec un solénoïde). Le corps principal comporte par exemple un microcontrôleur 1416 pour contrôler les modules de localisation.

Le corps secondaire est mobile par rapport au corps principal. Ainsi, la distance d (flèche 1417) séparant les modules de localisation 1414 et 1415 est variable. Par exemple, un utilisateur peut tenir le corps principal entre ses doigts et peut déplacer le corps secondaire avec son pouce.

La disposition relative des deux modules de localisation permet par exemple de fournir une fonction de détection de la rotation.

Il est alors possible d'effectuer des mouvements relatifs des modules de localisation, par exemple à titre d'interface alternative ou d'interface complémentaire pour les mouvements de rotation.

## EXEMPLES D'APPLICATIONS

Selon l'application visée, il peut être nécessaire de limiter l'exploitation du système (comportant un dispositif d'accueil et au moins un dispositif mobile) à un sous-ensemble de modules de localisation disponibles ou d'associer à certains modules de localisation une fonction particulière. Ainsi, dans une phase d'initialisation du système, il peut être nécessaire de définir une liste de modules de localisation dont la position ne doit pas être calculée (leur émission électromagnétique n'est pas activée par le module d'activation). Cette liste peut varier dans le temps et peut différer de sa valeur initiale définie lors de la phase d'initialisation. Il est également possible, dans une phase d'initialisation, d'affecter à un module de localisation ou à un dispositif mobile une fonction ou un rôle spécifique. Ainsi, par exemple, un dispositif mobile associé à un module de localisation prédéfinie peut jouer le rôle d'un Roi si ce dispositif mobile est exploité dans un programme de jeu d'échecs, ce même dispositif mobile pouvant également jouer le rôle d'une gomme ou d'un feutre dans une application de dessin ou encore avoir le rôle d'une voiture dans un programme d'éducation routière.

A titre d'exemple, l'association entre des modules de localisation et une fonction peut être effectuée en disposant les dispositifs mobiles comprenant ces modules de localisation sur des parties spécifiques de la surface de détection et en déclenchant un enregistrement. Le module de pilotage de détection et de capture de position effectue alors une séquence complète d'activation et les rôles sont associés en fonction des positions respectives des dispositifs mobiles (par exemple pièces d'un camp A versus pièces d'un camp B).

Lorsqu'un écran est superposé à la surface de détection, il est possible de choisir un rôle dans un menu contextuel pour chaque dispositif mobile en affichant un menu, près de la position de chaque dispositif mobile, proposant les différents rôles possibles.

Une application particulière de l'invention concerne les jeux de société en permettant de conserver l'aspect convivial des jeux de plateaux et le plaisir de manipuler de véritables pions ou figurines tout en bénéficiant de l'interactivité et du dynamisme des jeux vidéo. Dans ce domaine d'application, un large écran tactile est, de préférence, superposé à la surface de détection des pièces.

Les modules de localisation sont avantageusement placés dans les socles des figurines utilisées dans le jeu assurant ainsi la détection de la position des figurines dans le jeu.

L'écran tactile peut afficher la piste de jeu sur laquelle vont évoluer les figurines, offrant ainsi un support visuel dynamique. Typiquement, l'écran affiche l'environnement animé et réaliste dans lequel sont immergées les figurines (des couloirs dans un vaisseau spatial pour un jeu de science-fiction, des zones géographiques pour un jeu de type « risk », un échiquier si les figurines sont des pièces d'échecs, etc.).

Lors du lancement de jeu, le système propose une assignation de fonction aux dispositifs mobiles afin de permettre au programme de faire une relation entre l'identifiant d'un ou de plusieurs modules de détection et la figurine représentée par ce dispositif mobile. Ceci peut s'effectuer en affichant un menu spécifique de sélection de rôle sur l'écran près de la position de chaque figurine disposée sur le plateau.

Lorsque des pièces sont enregistrées, c'est-à-dire que leurs rôles leur ont été assignés, elles deviennent de véritables interfaces du jeu. Le système peut alors vérifier en permanence que les mouvements des figurines respectent bien les limites de déplacement imposées par les règles de jeu en prenant en compte leur rôle dans le jeu (se déplacer de case en case dans un couloir par exemple, respecter les mouvements appropriés pour un jeu d'échecs, etc.). Le système peut également calculer et afficher sur l'écran les lignes de vue entre deux figurines dans un jeu de combat ou calculer et afficher automatiquement les prises possibles aux échecs. Il est également possible de déclencher des animations visuelles contextuelles sous une figurine ou à partir d'une figurine. Ainsi, sélectionner un tir d'arme sur le menu d'une figurine peut faire apparaître un éclairage spécifique autour du tireur et la visualisation de balles traçantes entre deux figurines. De façon similaire, il est possible de déclencher des animations sonores contextuelles lorsque la position relative de deux figurines le permet. Par exemple, lorsqu'en déplaçant une figurine, le système détermine l'existence d'une ligne de vue avec une autre figurine, une alarme sonore « cible en vue » peut être déclenchée par le système.

De même, il est possible d'afficher des menus contextuels dépendant de la position des figurines (un menu de calcul de résultat d'un combat au corps à corps s'affiche si deux figurines ennemies sont à une distance minimale), offrir une aide en ligne automatique lorsqu'un joueur effectue un mouvement interdit avec sa figurine et modifier l'affichage sur l'écran lorsque les joueurs effectuent des rotations avec les figurines.

Comme décrit ci-avant, les figurines peuvent être utilisées comme interface pour naviguer dans le menu grâces à des mouvements de clic, d'aller-retour, de glissade ou autre.

Pour satisfaire des besoins spécifiques, une personne compétente dans le domaine de l'invention pourra appliquer des modifications dans la description précédente.

Un programme d'ordinateur pour la mise en œuvre d'un procédé selon un mode de réalisation de l'invention peut être réalisé par la personne du métier à la lecture de l'organigramme de la figure 13 et de la présente description détaillée.

Bien entendu, la présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de commande d'un dispositif d'accueil (105, 500) pour au moins un dispositif mobile (501, 505, 603, 608, 617) comportant les étapes suivantes de :

   - détermination (1300) d'une position courante dudit au moins un dispositif mobile par rapport à une surface d'interaction (502) dudit dispositif d'accueil au moyen d'au moins un signal électrique induit par au moins un champ magnétique inducteur dans au moins un circuit électrique (115) du dispositif d'accueil associé à ladite surface d'interaction, ladite détermination d'une position courante comprenant la détermination d'une position de chacun d'une pluralité de modules de localisation (604, 605, 624-627) dudit au moins un dispositif mobile, lesdits modules de localisation étant activés séquentiellement pour générer un champ magnétique inducteur destiné à induire un signal électrique dans ledit au moins un circuit électrique, chacun desdits modules de localisation étant associé à une surface d'interaction (613-616, 618-623, 629, 630) dudit au moins un dispositif mobile différente et comprenant un solénoïde (631, 632) dont l'axe radial est perpendiculaire à la surface d'interaction dudit au moins un dispositif mobile associée,

- enregistrement (1301) de ladite position courante dans un historique de positions, ledit historique de position comportant un ensemble de positions dudit au moins un dispositif mobile sur une fenêtre temporelle glissante,

- comparaison (1302), au moyen dudit historique, d'une évolution de la position dudit au moins un dispositif mobile par rapport à la surface d'interaction dudit dispositif d'accueil avec au moins un schéma d'évolution de référence, ledit schéma d'évolution de référence étant associé à au moins un mouvement de référence du dispositif mobile par rapport à la surface d'interaction dudit dispositif d'accueil, et

- déclenchement (1304) d'une commande dudit dispositif d'accueil en fonction dudit mouvement de référence, si ladite évolution correspond (1303) audit mouvement de référence,

- dans lequel, ladite position comporte :

- une distance entre le dispositif mobile et ladite surface d'interaction dudit dispositif d'accueil,

- une coordonnée du dispositif mobile dans un repère associé à ladite surface d'interaction dudit dispositif d'accueil, et

- une orientation du dispositif mobile selon un axe orthogonal à ladite surface d'interaction dudit dispositif d'accueil.

2. Procédé selon la revendication 1, comportant en outre les étapes suivantes :

- d'affichage sur un écran d'au moins un élément contextuel de sélection de ladite commande, ledit au moins un élément contextuel étant affiché au niveau d'une position sur l'écran représentant la position dudit dispositif mobile par rapport à ladite surface d'interaction dudit dispositif d'accueil, ,

- sélection dudit élément contextuel en fonction d'une première identification d'un premier mouvement de référence, et

- déclenchement de ladite commande en fonction d'une deuxième identification d'un deuxième mouvement de référence.

3. Procédé selon l'une des revendications précédentes, dans lequel :

- l'évolution de la position dudit dispositif mobile comporte une variation rapide de la distance entre le dispositif mobile et la surface d'interaction dudit dispositif d'accueil, et

- ledit mouvement de référence est un clic.

4. Procédé selon l'une des revendications précédentes, dans lequel :

- l'évolution de la position dudit dispositif mobile comporte une succession de variations rapides de la distance entre le dispositif mobile et une position de référence dans un repère associé à ladite surface d'interaction dudit dispositif d'accueil, et

- ledit mouvement de référence est une secousse.

5. Procédé selon l'une des revendications précédentes, dans lequel :

- l'évolution de la position dudit dispositif mobile comporte un déplacement rectiligne lent du dispositif mobile par rapport à ladite surface d'interaction dudit dispositif d'accueil, et

- ledit mouvement de référence est une glissade.

6. Procédé selon l'une des revendications précédentes, dans lequel :

- l'évolution de la position dudit dispositif mobile comporte une rotation de celui-ci par rapport à un axe orthogonal à ladite surface d'interaction dudit dispositif d'accueil, et

- ledit mouvement de référence est une rotation du dispositif mobile entre une première direction et une deuxième direction.

7. Procédé selon l'une des revendications précédentes, comportant en outre une étape préalable de réception d'un signal d'activation généré par le dispositif mobile suite à l'actionnement d'une interface utilisateur sur le dispositif mobile, pour activer la détermination de la position courante du dispositif mobile.

8. Programme d'ordinateur comportant des instructions pour la mise en oeuvre d'un procédé selon l'une quelconque des revendications précédentes lorsqu'il est chargé et exécuté par un processeur d'un dispositif d'accueil pour dispositif mobile.

9. Dispositif d'accueil (105, 500) comportant au moins une surface d'interaction (502) avec au moins un dispositif mobile (501, 505, 603, 608, 617) ledit dispositif d'accueil comportant un circuit électrique associé à la dite surface d'interaction, et une unité de traitement (255) configurée pour la mise en œuvre des étapes d'un procédé selon l'une des revendications 1 à 7.

10. Dispositif mobile (501, 505, 603, 608, 617) comportant une pluralité de modules de localisation (604, 605, 624-627) pour générer un champ magnétique inducteur destiné à induire un signal électrique dans au moins un circuit électrique (115) d'un dispositif d'accueil selon la revendication 9, chacun desdits modules de localisation étant associé à une surface d'interaction (613-616, 618-623, 629, 630) dudit au moins un dispositif mobile différente et comprenant un solénoïde (631, 632) dont l'axe radial est perpendiculaire à la surface d'interaction dudit au moins un dispositif mobile associée, ledit dispositif mobile comportant en outre une interface utilisateur configurée pour déclencher l'émission, par le dispositif mobile, d'un signal de commande du dispositif d'accueil.

**11.** Dispositif selon la revendication 10, dans lequel ledit signal est un signal d'activation de la détermination par le dispositif d'accueil, de la position courante du dispositif mobile par rapport à une surface d'interaction du dispositif d'accueil.

**12.** Dispositif selon la revendication 10, dans lequel ladite interface comporte une pluralité de positions successives, et dans lequel ledit signal est un signal représentatif d'une position courante de l'interface.

**13.** Dispositif selon la revendication 10, dans lequel ladite pluralité de modules de localisation comporte un premier module de localisation étant installé dans un corps principal du dispositif mobile et un second module de localisation étant installé dans un corps secondaire du dispositif mobile, le corps secondaire étant apte à se déplacer par rapport au corps principal.

**14.** Système comportant un dispositif d'accueil selon la revendication 9 et au moins un dispositif mobile selon l'une des revendications 10 à 13.

**Patentansprüche**

**1.** Verfahren zum Steuern einer Hoststation (105, 500) für mindestens eine bewegliche Vorrichtung (501, 505, 603, 608, 617), umfassend die folgenden Schritte:

- Bestimmen (1300) einer aktuellen Position der mindestens einen beweglichen Vorrichtung in Bezug auf eine Interaktionsfläche (502) der Hoststation mittels mindestens eines elektrischen Signals, das durch mindestens ein Induktionsmagnetfeld in mindestens einer elektrischen Schaltung (115) der Hoststation, die der Interaktionsfläche zugeordnet ist, induziert wird, wobei das Bestimmen einer aktuellen Position das Bestimmen einer Position von jedem aus einer Vielzahl von Lokalisierungsmodulen (604, 605, 624-627) der mindestens einen beweglichen Vorrichtung umfasst, wobei die Lokalisierungsmodule sequenziell aktiviert werden, um zum Induzieren eines elektrischen Signals in der mindestens einen elektrischen Schaltung ein Induktionsmagnetfeld zu erzeugen, wobei jedes der Lokalisierungsmodule einer Interaktionsfläche (613-616, 618-623, 629, 630) der mindestens einen unterschiedlichen beweglichen Vorrichtung zugeordnet ist und einen Solenoid (631, 632) umfasst, dessen radiale Achse senkrecht zu der Interaktionsfläche der mindestens einen zugeordneten beweglichen Vorrichtung ist,
- Speichern (1301) der aktuellen Position in einer Positionshistorie, wobei die Positionshistorie eine Reihe von Positionen der mindestens einen beweglichen Vorrichtung über ein gleitendes Zeitfenster umfasst,
- Vergleichen (1302), mittels der Historie, einer Entwicklung der Position der mindestens einen beweglichen Vorrichtung in Bezug auf die Interaktionsfläche der Hoststation mit mindestens einem Referenzentwicklungsmuster, wobei das Referenzentwicklungsmuster mindestens einer Referenzbewegung der beweglichen Vorrichtung in Bezug auf die Interaktionsfläche der Hoststation zugeordnet ist, und
- Auslösen (1304) einer Steuerung der Hoststation in Abhängigkeit von der Referenzbewegung, wenn die Entwicklung mit der Referenzbewegung übereinstimmt (1303),
- wobei die Position Folgendes umfasst:
- einen Abstand zwischen der beweglichen Vorrichtung und der Interaktionsfläche der Hoststation,
- eine Koordinate der beweglichen Vorrichtung in einem Koordinatensystem, das der Interaktionsfläche der Hoststation zugeordnet ist, und
- eine Ausrichtung der mobilen Vorrichtung entlang einer Achse, die orthogonal zu der Interaktionsfläche der Hoststation verläuft.

**2.** Verfahren nach Anspruch 1, ferner umfassend die folgenden Schritte:

- Anzeigen mindestens eines kontextsensitiven Auswahlelements der Steuerung auf einem Bildschirm, wobei das mindestens eine kontextsensitive Element an einer Position auf dem Bildschirm angezeigt wird, welche die Position der beweglichen Vorrichtung in Bezug auf die Interaktionsfläche der Hoststation darstellt,
- Auswählen des kontextsensitiven Elements in Abhängigkeit von einer er-ten Identifizierung einer ersten Referenzbewegung, und
- Auslösen der Steuerung in Abhängigkeit von einer zweiten Identifizierung einer zweiten Referenzbewegung.

**3.** Verfahren nach einem der vorstehenden Ansprüche, wobei:

- die Entwicklung der Position der beweglichen Vorrichtung eine schnelle Veränderung des Abstands zwischen der beweglichen Vorrichtung und der Interaktionsfläche der Hoststation umfasst, und
- die Referenzbewegung ein Klick ist.

4. Verfahren nach einem der vorstehenden Ansprüche, wobei:

   - die Entwicklung der Position der beweglichen Vorrichtung eine Abfolge von schnellen Veränderungen des Abstands zwischen der beweglichen Vorrichtung und einer Referenzposition in einem Koordinatensystem umfasst, das der Interaktionsfläche der Hoststation zugeordnet ist, und
   - die Referenzbewegung eine Erschütterung ist.

5. Verfahren nach einem der vorstehenden Ansprüche, wobei:

   - die Entwicklung der Position der beweglichen Vorrichtung eine langsame geradlinige Verlagerung der beweglichen Vorrichtung in Bezug auf die Interaktionsfläche der Hoststation umfasst, und
   - die Referenzbewegung ein Rutschen ist.

6. Verfahren nach einem der vorstehenden Ansprüche, wobei:

   - die Entwicklung der Position der beweglichen Vorrichtung eine Drehung derselben in Bezug auf eine Achse orthogonal zu der Interaktionsfläche der Hoststation umfasst, und
   - die Referenzbewegung eine Drehung der beweglichen Vorrichtung zwischen einer ersten Richtung und einer zweiten Richtung ist.

7. Verfahren nach einem der vorstehenden Ansprüche, ferner umfassend einen vorherigen Schritt des Empfangens eines Aktivierungssignals, das von der beweglichen Vorrichtung nach der Betätigung einer Benutzerschnittstelle an der beweglichen Vorrichtung erzeugt wird, um das Bestimmen der aktuellen Position der beweglichen Vorrichtung zu aktivieren.

8. Computerprogramm, das Anweisungen zum Durchführen eines Verfahrens nach einem der vorstehenden Ansprüche umfasst, wenn es von einem Prozessor einer Hoststation für eine bewegliche Vorrichtung geladen und ausgeführt wird.

9. Hoststation (105, 500), umfassend mindestens eine Interaktionsfläche (502) mit mindestens einer beweglichen Vorrichtung (501, 505, 603, 608, 617), wobei die Hoststation eine elektrische Schaltung, die der Interaktionsfläche zugeordnet ist, und eine Ver-

arbeitungeinheit (255) umfasst, die zum Durchführen der Schritte eines Verfahrens nach einem der Ansprüche 1 bis 7 konfiguriert ist.

10. Bewegliche Vorrichtung (501, 505, 603, 608, 617), umfassend eine Vielzahl von Lokalisierungsmodulen (604, 605, 624-627), um ein Magnetfeld zum Induzieren eines elektrischen Signals in mindestens einer elektrischen Schaltung (115) einer Hoststation nach Anspruch 9 zu erzeugen, wobei jedes der Lokalisierungsmodule einer unterschiedlichen Interaktionsfläche (613-616, 618-623, 629, 630) der mindestens einen beweglichen Vorrichtung zugeordnet ist und einen Solenoid (631, 632) umfasst, dessen radiale Achse senkrecht zur Interaktionsfläche der zugeordneten mindestens einen beweglichen Vorrichtung verläuft, wobei die bewegliche Vorrichtung ferner eine Benutzerschnittstelle umfasst, die konfiguriert ist, um ein Steuersignal der Hoststation durch die bewegliche Vorrichtung auszulösen.

11. Vorrichtung nach Anspruch 10, wobei das Signal ein Aktivierungssignal der Bestimmung durch die Hoststation, der aktuellen Position der beweglichen Vorrichtung in Bezug auf eine Interaktionsfläche der Hoststation ist.

12. Vorrichtung nach Anspruch 10, wobei die Schnittstelle eine Vielzahl von aufeinanderfolgenden Positionen umfasst und wobei das Signal ein Signal ist, das eine aktuelle Position der Schnittstelle darstellt.

13. Vorrichtung nach Anspruch 10, wobei die Vielzahl von Lokalisierungsmodulen ein erstes Lokalisierungsmodul, das in einem Hauptkörper der beweglichen Vorrichtung installiert ist, und ein zweites Lokalisierungsmodul, das in einem Nebenkörper der beweglichen Vorrichtung installiert ist, umfasst, wobei der Nebenkörper in der Lage ist, sich in Bezug auf den Hauptkörper zu verlagern.

14. System, umfassend eine Hoststation nach Anspruch 9 und mindestens eine bewegliche Vorrichtung nach einem der Ansprüche 10 bis 13.

**Claims**

1. A method for controlling a host device (105, 500) for at least one mobile device (501, 505, 603, 608, 617) comprising the steps of:

   - determination (1300) of a current position of said at least one mobile device with respect to an interaction surface (502) of the host device by means of at least one electrical signal induced by at least one inductive magnetic field in at least an electrical circuit (115) of the host device associated with said interaction surface, said determination of a current position comprising determining a position of each of a plurality of location modules (604, 605, 624-627) of said at least one mobile device, said location modules being sequentially activated to generate an inductive magnetic field for inducing an electrical signal in said at least one electrical circuit, each of said location modules being associated with a different interaction surface (613-616, 618-623, 629, 630) of said at least one mobile device and comprising a solenoid (631, 632) having a radial axis perpendicular to the associated interaction surface of said at least one mobile device,

- recording (1301) of said current position in a position history, said position history comprising a set of positions of said at least one mobile device over a sliding time window,

- comparison (1302), by means of said history, of an evolution of the position of said at least one mobile device with respect to the interaction surface of the host station with at least one reference evolution diagram, said reference evolution diagram being associated with at least one reference movement of the mobile device with respect to the interaction surface of the host station, and

- triggering (1304) of a command of the host station based on said reference movement, if said evolution corresponds (1303) to said reference movement,

- wherein said position comprises:

- a distance between the mobile device and said interaction surface of the host device,

- a coordinate of the mobile device in a frame of reference associated with said interaction surface of the host device, and

- an orientation of the mobile device along an axis orthogonal to said interaction surface of the host device.

2. The method of claim 1, further comprising the following steps:

- display on a screen of at least one contextual element for selecting said command, said at least one contextual element being displayed at a position on the screen representing the position of said mobile device with respect to said interaction surface of the host device,

- selection of said contextual element based on a first identification of a first reference movement, and

- triggering of said command based on a second identification of a second reference movement.

3. The method according to one of the preceding claims, wherein:

- the evolution of the position of said mobile device includes a rapid variation in the distance between the mobile device and the interaction surface of the host device,

- said reference movement is a click.

4. The method according to one of the preceding claims, wherein:

- the evolution of the position of said mobile device comprises a succession of rapid variations in the distance between the mobile device and a reference position in a reference point associated with said interaction surface of the host device,

- said reference movement is a jerk.

5. The method according to one of the preceding claims, wherein:

- the evolution of the position of said mobile device comprises a slow rectilinear movement of the mobile device with respect to said interaction surface of the host device,

- said reference movement is a slip.

6. The method according to one of the preceding claims, wherein::

- the evolution of the position of said mobile device comprises a rotation of the latter with respect to an axis orthogonal to said interaction surface of the host device,

- said reference movement is a rotation of the mobile device between a first direction and a second direction.

7. The method according to one of the preceding claims, further comprising a prior step of receiving an activation signal generated by the mobile device following the actuation of a user interface on the mobile device, in order to activate the determination of the current position of the mobile device.

8. A computer program comprising instructions for carrying out a method according to any one of the preceding claims when loaded and executed by a processor of a host device for a mobile device.

9. A host device (105, 500) comprising at least one interaction surface (502) with at least one mobile device (501, 505, 603, 608, 617), said host device comprising an electrical circuit associated with said interaction surface, a processing unit (255) configured to carry out the steps of a method according to one of claims 1 to 7.

**10.** A mobile device (501, 505, 603, 608, 617) comprising a plurality of location modules (604, 605, 624-627) for generating an inducing magnetic field intended to induce an electrical signal in at least one electrical circuit (115) of a host device according to claim 9, each of said location modules being associated with a different interaction surface (613-616, 618-623, 629, 630) of said at least one mobile device and comprising a solenoid (631, 632) having a radial axis perpendicular to the associated interaction surface of said at least one mobile device, said mobile device further comprising a user interface configured to trigger the transmission, by the mobile device, of a control signal from the host device.

**11.** The device according to claim 10, wherein said signal is a signal for activating the determination by the host device of the current position of the mobile device with respect to an interaction surface of the host device.

**12.** The device according to claim 10, wherein said interface comprises a plurality of successive positions, and wherein said signal is a signal representative of a current position of the interface.

**13.** The device according to claim 10, wherein said plurality of location modules comprises a first location module being installed in a main body of the mobile device and a second location module being installed in a secondary body of the mobile device, the secondary body being capable of moving relative to the main body.

**14.** A system comprising a host device according to claim 9 and at least one mobile device according to one of claims 10 to 13.

Fig. 1

Fig. 3

Fig. 4

EP 2 941 683 B1

Fig. 5

501

503

504

5 3
1

505

502

500

Fig. 2

205

200

210

MUX

220

MUX 215

115

Filtre passe-bande CAG 230

Filtre passe-bande CAG 225

235

Démodulateur 240

Démodulateur

260

130-1

CAN 250

CAN 245

CPU 255

(X,Y)

130-2

EP 2 941 683 B1

Fig. 6a

Fig. 6b

Fig.6d

Fig.6c

Fig.6e

Fig.6f

Fig. 7a

Fig. 7b

EP 2 941 683 B1

Fig. 8a

Fig. 8b

Fig. 8c

Fig. 8d

Fig. 8e

Fig. 8f

Fig. 8g

Fig. 8h

SyncA SyncB  SyncB  SyncB  SyncB  SyncA  SyncB  SyncB  SyncA SyncB

Module 1
Module 2
Module 3
Module 4

Fig. 10

Fig. 9

Distance

Temps

## Fig. 11a

Distance

Temps

## Fig. 11b

Distance

Temps

## Fig. 11c

Distance

Temps

## Fig. 11d

1204

1205

1200

1201

1203

## Fig. 12a

1207

1206

A

1201

1208

B

1200

C

## Fig. 12b

1209

1211    1207

1201

1200

1210    1209

Fig. 12c

1212    1207

1201

1200

1209

Fig. 12d

1212    1207

1201

1200

1208

1209

Fig. 12e

Fig. 12f

Fig. 12g

Fig. 13

Fig. 14a

Fig. 14b

Fig. 14c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012028827 A
- FR 1255334
- US 2007015588 A1